(19) Europäisches Patentamt
European Patent Office
Office européen des brevets

(11) **EP 4 113 006 A2**

(12) **EUROPÄISCHE PATENTANMELDUNG**

(43) Veröffentlichungstag:
**04.01.2023 Patentblatt 2023/01**

(21) Anmeldenummer: **22177775.8**

(22) Anmeldetag: **08.06.2022**

(51) Internationale Patentklassifikation (IPC):
*F23J 15/02* *(2006.01)* *F23L 17/00* *(2006.01)*
*F23L 17/14* *(2006.01)* *F23J 15/06* *(2006.01)*
*F23N 3/04* *(2006.01)* *F23N 5/24* *(2006.01)*
*B01D 46/24* *(2006.01)*

(52) Gemeinsame Patentklassifikation (CPC):
**F23J 15/025; B01D 46/24; F23J 15/06;**
**F23L 17/005; F23L 17/14; F23N 3/04; F23N 5/242;**
**F23N 5/245;** B01D 2273/30; F23J 2213/202;
F23J 2213/70; F23J 2215/20; F23J 2217/101;
F23J 2217/102; F23J 2217/104; (Forts.)

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(30) Priorität: **10.06.2021 DE 102021002932**

(71) Anmelder: **dezentec GmbH**
**34117 Kassel (DE)**

(72) Erfinder:
• **Die Erfinder haben auf ihr Recht verzichtet, als**
**solche bekannt gemacht zu werden.**

(74) Vertreter: **Weisbrodt, Bernd**
**Ring & Weisbrodt**
**Patentanwaltsgesellschaft mbH**
**Hohe Straße 33**
**40213 Düsseldorf (DE)**

(54) **FEINSTAUBABSCHEIDUNGSEINRICHTUNG FÜR KLEINFEUERUNGSANLAGEN**

(57) Die vorliegende Erfindung betrifft eine Vorrichtung zur Filterung von Feinstaub, insbesondere für Festbrennstoff-Kleinfeuerungsanlagen, mit
einer Absaugeinheit (30) umfassend
- einen Anschluss an das Abgassystem (32) zur Verbindung der Absaugeinheit (30) mit einem Rauchgasweg (10), aus welchem von einer Feuerung ein Rauchgas (04) strömt, und
- eine Absaugöffnung (34),

und einer Filtereinheit (60) umfassend
- eine mit der Absaugöffnung (34) verbundene Eintrittsöffnung (66),
- eine Austrittsöffnung (68),
- ein zwischen der Eintrittsöffnung (66) und der Austrittsöffnung (68) angeordnetes Filterelement (50),

wobei die Absaugeinheit (30) und die Filtereinheit (60) mit Filterelement (50) in einer Baugruppe, bevorzugt als "Auf-Dach-Lösung", am oberen Ende des Schornsteins, also am Ende des Rauchgaswegs, angeordnet sind, dadurch gekennzeichnet, dass
die Vorrichtung ferner wenigstens eine der folgenden Ausgestaltungen aufweist:
- als Filterelement (50) ist ein elektrostatischer Abscheider (E-Filter) vorgesehen, welcher dazu eingerichtet ist, Feinstaub, Kondensat und/oder Kondensatbestandteile abzuscheiden und welcher von der abgeschiedenen Verschmutzungsfracht in einen hierfür vorgesehenen Auffangraum (26) abgereingt werden kann, und/oder
- als Filterelement (50) ein Tiefenfilter vorgesehen ist, welches dazu eingerichtet ist, Feinstaub, Kondensat und/oder Kondensatbestandteile abzuscheiden.

Fig. 1

**(Forts. nächste Seite)**

(52) Gemeinsame Patentklassifikation (CPC): (Forts.)
F23J 2219/60; F23J 2219/80; F23J 2900/11001;
F23J 2900/13004; F23N 2225/10; F23N 2231/00;
F23N 2233/04; F23N 2235/04

**Beschreibung**

Die vorliegende Erfindung betrifft eine Vorrichtung zur Filterung von Feinstaub, insbesondere für Festbrennstoff-Kleinfeuerungsanlagen.

In der Öffentlichkeit wurden Feinstaubemissionen von Kleinfeuerungsanlagen wie Einzelraumfeuerungen, Kaminen, Öfen und kleineren Heizkesseln aufgrund ihrer Gesundheitsgefahren stark debattiert. Sowohl auf Bundesebene als auch teilweise auf kommunaler Ebene wurden Vorschriften in Kraft gesetzt, die Grenzwerte für die Staubemissionen von Kleinfeuerungsanlagen enthalten.

Beispielsweise fordert die gesetzliche Lage in Deutschland ab dem Jahr 2010 für bestehende und ab dem Jahre 2015 für neue Feuerungen diesbezüglich, dass Staubemissionen für Kleinfeuerungsanlagen auf 20 mg/m³ Rauchgas und für Einzelraumfeuerungen auf 40 mg/m³ Rauchgas, entsprechend der ersten Bundes-Immissionsschutzverordnung (1. BImSchV), zu begrenzen sind. Für bestehende Feuerungen gelten, abhängig von ihrem Alter, unterschiedliche Übergangsfristen.

Der überwiegende Teil, d.h. 80 - 95 % der Masse des Feinstaubs weist eine Partikelgröße von deutlich weniger als einem Mikrometer auf. Daher kommen aus technischer Sicht zur Abscheidung dieser kleinen Partikel lediglich die elektrostatische Abscheidung sowie die Filtration in Betracht, welche Abscheidegrade im Submikrometerbereich von etwa 95% für elektrostatische Abscheider und über 99,5% für filternde Abscheider aufweisen [Quelle: Fritz, W.; Kern, H.: Reinigung von Abgasen, 3. Auflage, 1992, Vogel Buchverlag].

Es ist bekannt, dass verschiedene Systeme zur Staubabscheidung für Kleinfeuerungsanlagen am Markt angeboten werden, welche unter anderem bei bestehenden Anlagen nachgerüstet werden können. Hierbei handelt es sich ausnahmslos um elektrostatische Abscheider, welche auch als E-Filter bezeichnet werden.

Bei derartigen E-Filtern wird über einen Hochspannungsgenerator und eine sogenannte Sprühelektrode mit negativer Ladung in dem zu reinigenden Gasstrom ein elektrostatisches Feld erzeugt, in dem sich Staubpartikel elektrostatisch aufladen. Aufgrund der elektrostatischen Feldkräfte bewegen sich die negativ geladenen Staubpartikel zu einer positiv oder neutral geladenen sogenannten Niederschlagselektrode, an der sie durch Anhaftung aus dem Gasstrom entfernt werden. Die am Markt verfügbaren E-Filter für Einzelraumfeuerungen verfügen über einen konzentrischen Aufbau mit mittiger Sprühelektrode und Nutzung eines Abgasrohres als Niederschlagselektrode. Aufgrund dieser Geometrie verringert sich der freie Strömungsquerschnitt mit zunehmender Betriebsdauer durch die Abscheidung von Feinstaub aus dem Gasstrom und dessen Anlagerung an den Wänden des Rauchgaskanals. Hierdurch wird der Strömungswiderstand des Rauchgases erhöht, so dass eine Wartung in Form einer manuellen Reinigung, beispielsweise durch den Schornsteinfeger, erforderlich wird.

Abgeschiedener Feinstaub, der innerhalb des Rauchgaswegs zurückgehalten wird, hat an allen Stellen eine negativen Einfluss auf den Betrieb der Feuerung und das Abscheideverhalten eines E-Filters. Die Blockierung des Rauchgaswegs erhöht den Strömungswiderstand und damit den freien Rauchgasabzug sowie den Betrieb der Feuerung. Eine wachsende Schicht von Feinstaub auf der (Rohr)Oberfläche des Rauchgaswegs behindert die Ausbildung des elektrostatischen Feldes zwischen Niederschlags- und Sprühelektrode, d.h. die Abscheidewirkung des E-Filters verringert sich dadurch während des Betriebes. Auf die betriebsnotwendige häufige händische Wartung verweist ein Hersteller von E-Filtern bereits in der Betriebs- und Wartungsanleitung: bis zu mehrfach pro Monat.

Das Bundesamt für Wirtschaft und Ausfuhrkontrolle (BAFA) führt in der aktuellen Positiv-Liste für Förderungen von Partikelabscheidern an Kleinfeuerungsanlagen nur E-Filter und kein Filter auf [Quelle: Förderübersicht: Heizen mit erneuerbaren Energien]. Obwohl allgemein bekannt ist, dass Filter allgemein, und insbesondere Tiefenfilter, über eine deutlich bessere Abscheidung verfügen als E-Filter und obwohl die gesetzliche Grundlage für die Feinstaubabscheidung an Kleinfeuerungsanlagen bereits seit dem 22. März 2010 in Kraft ist und bereits lange Zeit zuvor bekannt war, hat sich bis jetzt kein einziges (Tiefen-)filtersystem zur Feinstaubabscheidung an Kleinfeuerungsanlagen etabliert.

Dies verdeutlicht, dass es von der Fachwelt für unmöglich gehalten wird, in vergleichsweise preiswerten (für den Endkunden wenige Tausend Euro teuren) Kleinsystemen, mit seltener Wartung, ohne permanente Beaufsichtigung im Betrieb, wie es bei Industriefiltern üblich ist, und unter häufigem Durchfahren von Taupunkt- und Frostgrenzen, Stäube mit gleichzeitigem Auftreten von Feuchte durch wässriges Kondensat und klebrige Anteile durch teerhaltiges Kondensat, mit (Tiefen-)Filtern sicher, zuverlässig und mit ausreichender Standzeit abzuscheiden.

Ferner ist aus der DE 10 2008 059 432 A1 eine Rauchgasreinigungseinrichtung bekannt, welche in einem Abgaskanal anzuordnen ist und sich keramischer Abgasfilter bedient, die durch Strömungsumkehr abzureinigen sind. Eine technische Umsetzung ist hier nicht bekannt, insbesondere keine marktverfügbare. Dabei ist zu beachten, dass grundsätzlich die abzuscheidende Staubmenge pro Heizperiode (d.h. die Differenz zwischen Grenzwert und Rohgasstaubkonzentration) bei gängigen Feuerungen mit kleiner Feuerungswärmeleistung wie z.B. Kaminöfen oder Pelletkesseln eher gering ist, da sie meist weniger als 1 kg pro Heizperiode beträgt. Bei Feuerungen mit größerer Feuerungswärmeleistung wie z.B. Scheitholz- und Hackschnitzelkesseln mit beispielsweise 30 bis 50 kW können mit bis zu 20 kg deutlich höhere Staubmengen erreicht werden.

Laut offiziellen Quellen wie BMU und UBA beträgt die durchschnittliche jährliche Feinstaubmenge pro Holzfeuerung in Deutschland etwa 1,5 kg. Dieser Wert ergibt sich aus einer Gesamtemission von 17.000 Tonnen Feinstaub pro Jahr aus Holzfeuerungen (lt. BMU/UBA) und bei einer Anzahl von etwa 11 Mio. Öfen (Quelle: BMU, HKI e.V. für Ofenanzahl - 17.000 t / 11 Mio. Öfen ~ 1,55 kg im Mittel über alle Öfen).

Die abgeschiedene Verschmutzungsfracht verfügt über eine sehr geringe Schüttdichte, die bei einer eigenen Ermittlung mit 53 g/l bestimmt wurde. Auch wenn dieser Wert Schwankungsbreiten aufweist, ergibt sich ein Schüttvolumen von etwa 30 Litern abzuscheidender Verschmutzungsfracht pro Jahr für den Durchschnittsofen in Deutschland. Es ist daher klar, dass dieses Volumen nicht über ein Jahr in einem Rauchrohr bis zur nächsten Wartung durch den Schornsteinfeger zurückgehalten werden kann - entweder ist das Abreinigungs- und Wartungsintervall erheblich kürzer, oder das Volumen muss in einer entsprechend großen Vorrichtung zwischengespeichert werden, oder es erfolgt eine intervallweise Abreinigung mit chargenweisem Austrag aus einem entsprechend kleineren Speichervolumen.

Die bekannten Filtertechniken sind insbesondere aufgrund der verwendeten automatisierten Abreinigung der Filter technisch aufwendig und auch fehleranfällig, insbesondere bei preiswerten Kleinsystemen ohne die in der Industrie übliche Beaufsichtigung, mit seltener Wartung und Betriebsbedingungen, bei denen sowohl die Grenzen für Taupunkte als auch die Frostgrenze häufig durchlaufen wird. Durch die parallel zur Staubabscheidung stattfindende Abscheidung von kondensierenden Teeren wird die Menge der real abgeschiedenen Verschmutzungsfracht deutlich erhöht. Dieser aus Umwelt- und Gesundheitsschutzgründen positive Nebeneffekt der Staubabscheidung führt jedoch zu einer Verringerung der Standzeiten der eingesetzten Filtermaterialien, welche durch die größeren abgeschiedenen Mengen deutlich stärker belastet werden.

Vor diesem Hintergrund ist es Aufgabe der Erfindung, eine Vorrichtung zur Staubabscheidung zur Verfügung zu stellen, die sowohl robust in den Betriebseigenschaften und unempfindlich gegen Störungen und Fehlbedienungen ist, als auch über ausreichend lange Standzeiten ohne weitere Wartung verfügt.

Zur Lösung dieser Aufgabe wird eine Vorrichtung zur Filterung von Feinstaub, insbesondere für Festbrennstoff-Kleinfeuerungsanlagen, mit

einer Absaugeinheit umfassend

- ein Anschlussrohr zur Verbindung der Absaugeinheit mit einem Rauchgasweg, aus welchem von einer Feuerung ein Rauchgas strömt, und

- eine Absaugöffnung,

und einer Filtereinheit umfassend

- eine mit der Absaugöffnung mittels einer ersten Verbindungseinheit verbundene Eintrittsöffnung,

- eine Austrittsöffnung,

- ein zwischen der Eintrittsöffnung und der Austrittsöffnung angeordnetes Filterelement, und vorzugsweise

- einen bei einigen Ausführungen zwischen der Austrittsöffnung und dem Filterelement angeordneten Lüfter, welcher dazu eingerichtet ist, einen Ansaugdruck zu erzeugen,

wobei die Absaugeinheit und die Filtereinheit in mindestens einer Baugruppe zusammengefasst sind und bei Ausführungen mit separaten, räumlich voneinander getrennt angeordneten Baugruppen mittels Verbindungseinheiten bzw. -mitteln strömungstechnisch miteinander verbunden bzw. verbindbar sind, vorgeschlagen.

Eine vorteilhafte Ausgestaltung der Erfindung sieht ferner eine mit der Absaugeinheit verbundene Rezirkulationseinheit vor, umfassend

- eine mit der Austrittsöffnung mittels einer zweiten Verbindungseinheit verbundene Rezirkulationsöffnung, und

- mindestens ein Leitblech, welches dazu eingerichtet ist, eine Mischung eines aus der Austrittsöffnung strömenden Reingases mit dem Rauchgas zu veranlassen und die dem rezirkulierten Reingas beim Ausströmen eine bevorzugte Richtung zur Atmosphäre hin zu geben können.

Im Speziellen betrifft die Erfindung eine Vorrichtung mit Absaugeinheit und Filtereinheit

- bei der die Absaugeinheit (30) und die Filtereinheit (60) in einer Baugruppe bevorzugt als "Auf-Dach-Lösung", am oberen Ende des Schornsteins, also am Ende des Rauchgaswegs, angeordnet sind und bei der ein E-Filter oder ein Tiefenfilter als Filterelement (50) vorgesehen ist, um Feinstaub, Kondensat und/oder Kondensatbestandteile abzuscheiden, bzw.

- bei der die Absaugeinheit (30) und die Filtereinheit (60) in mindestens einer Baugruppe angeordnet sind und in der die zur Steuerung der Vorrichtung, insbesondere der Ventilatordrehzahl, erforderliche Messung der Strömungsverhältnisse innerhalb der Vorrichtung indirekt über Temperaturmessungen der Gasströme mittels Thermoelementen oder dergleichen erfolgt. Dabei hat die Bewertung der Temperaturmessergebnisse die Abkühlung des Reingases, über Oberflächen zumindest der Filtereinheit, im Vergleich zur höheren Temperatur des Rohgases als Grundlage und betrachtet bevorzugt auch die Mischtemperatur von Roh- bzw. Reingas mit Falschgas, bzw.

- bei der die Absaugeinheit (30) und die Filtereinheit (60) in mindestens einer Baugruppe angeordnet sind und ein thermischer Schutzmechanismus vorgesehen ist und die Steuerung auf Übertemperaturen des Rauchgases zumindest mit einer der folgenden Maßnahmen reagiert:

  - Abschaltung des Lüfters

  - Reduktion der Lüfterdrehzahl, so dass alleine oder in Verbindung mit anderen Maßnahmen zur Reduktion der Übertemperaturen die zulässige Betriebstemperatur, insbesondere für das Filtermedium, bevorzugt nicht überschritten oder weniger bevorzugt nur kurzzeitig überschritten wird

  - Drosselung des Gaswegs

  - Kühlung durch Falschlufteintrag, bevorzugt in Strömungsrichtung vor den Filterelementen (50), durch zusätzliche Öffnung(-en) und/oder zusätzliche(n) Ventilator(en)

  - Kühlung durch Kühlmittel, bevorzugt Wasserquench, bevorzugt in Strömungsrichtung vor den Filterelementen (50)

  - Öffnung von (Not-)Klappen, so dass die heißen Rauchgase direkt vor dem Kontakt mit dem Filtermaterial an die Atmosphäre abgeleitet werden, bzw.

- bei der die Absaugeinheit (30) und die Filtereinheit (60) in mindestens einer Baugruppe angeordnet sind und zumindest das Filterelement (50) in einer solchen Weise temperaturresistent ausgeführt ist, das eine thermische in-situ Regeneration ohne Zerstörung des Bauteils ermöglicht wird und das/die Bauteil(-e) auch den maximalen Bedingungen eines Kaminbrandes und/oder Rußbrandes mit etwa 1.000 °C standhält, bzw.

- bei der die Absaugeinheit (30) und die Filtereinheit (60) in mindestens zwei räumlich voneinander getrennten Baugruppen angeordnet sind und bei der ein E-Filter oder ein Tiefenfilter als Filterelement (50) vorgesehen ist, um Feinstaub, Kondensat und/oder Kondensatbestandteile abzuscheiden, bzw.

- bei der die Absaugeinheit (30) und die Filtereinheit (60) in mindestens einer Baugruppe angeordnet sind, bei der ein E-Filter oder ein Tiefenfilter als Filterelement (50) vorgesehen ist, um Feinstaub, Kondensat und/oder Kondensatbestandteile abzuscheiden, und bei der zur Umschaltung der Gasströme zwischen Filtrationsweg und Bypassweg mindestens eine Rauchgasklappe (24) oder eine vergleichbare Apparatur zur Lenkung des Gasstroms bzw. der Gasströme innerhalb der Vorrichtung vorgesehen ist.

Erfindungsgemäß kann die Integration einer Rauchgasklappe (24) vorteilhafterweise sowohl in Ausführungen mit Absaug (30)- und Filtereinheit (60) einer Baugruppe als auch in einer Ausführung, bei der Absaug- und Filtereinheit in räumlich voneinander getrennten Baugruppen angeordnet sind vorgesehen sein.

Erfindungsgemäß wird angesichts der vergleichsweise geringen Staubmengen zunächst die Verwendung von Tiefen- bzw. Speicherfiltern als einfache und preiswerte sowie robuste Alternative zu automatisch abzureinigenden Filtern vorgeschlagen.

Solch eine Speicher- oder auch Tiefenfiltration ist beispielsweise aus dem Bereich der Reinigung von bereitgestellten Atemgasen, beispielsweise im Bereich der Klima- oder Belüftungstechnik bekannt. Im Bereich der Partikelgröße von Feinstäuben aus Kleinfeuerungsanlagen verfügen filternde Abscheider, verglichen mit elektrostatischen Abscheidern - bezogen auf industrielle Anwendungen - über eine etwa 5%-Punkte bessere Abscheideleistung [Quelle: Fritz, W.; Kern, H.: Reinigung von Abgasen, 3. Auflage, 1992, Vogel Buchverlag]. Erfindungsgemäß wird demnach eine Lösung vorgeschlagen, welche sowohl eine robuste und verlässliche Speicherfiltration erreicht als auch eine ausfallsichere Betriebsweise der Filteranlage erlaubt.

Gemäß der Erfindung ist die Rauchgasreinigungseinrichtung sowohl zum Anschluss an Schornsteine von Feststoff-Kleinfeuerungsanlagen, d.h. am Ende eines Rauchgasweges (auf Dach, bspw. auf dem Schornstein), als auch zur Integration in den Rauchgasweg d.h. nahe dem Feuerraum (noch innerhalb des Ofens), zwischen Ofen und Kamin im sogenannten Anschlussstück, unter Dach bzw. auf dem Dachboden einer insbesondere für Feststoffe geeigneten Kleinfeuerung vorgesehen. Eine Ausführung der Erfindung im Bypass zum vorgenannten Rauchgasweg wird ebenfalls als wird ebenfalls als Integration in den Rauchgasweg im Sinne dieser Erfindung angesehen. Das Rauchgas einer Feuerungsanlage wird in die durch die erfindungsgemäße Vorrichtung realisierte Reinigungseinrichtung eingeleitet, dort gereinigt und letztlich an die Umwelt abgegeben.

Eine andere Ausführung der erfindungsgemäßen Rauchgasreinigungsvorrichtung weist mit der Absaugeinheit und der Filtereinheit mindestens zwei räumlich voneinander getrennte Baugruppen auf, die durch mindestens ein Verbindungselement, das beispielsweise als isolierter Metallschlauch ausgeführt ist, miteinander verbunden und in Richtung der Umgebung abgedichtet sind. Zur Vereinfachung des Anschlusses dieser iso-

lierten Metallschläuche an die Absaug- und Filtereinheit sowie die Rezirkulationseinheit können vorteilhafterweise Schnellverschlusssysteme wie Bajonettverschluss, Feuerwehrkupplungen, Kamlock-Kupplungen oder ähnliche Anschlüsse verwendet werden.

Zur Überwindung des betriebsnotwendigen Differenzdrucks, vor allem der Filtereinheit, insbesondere bei der Verwendung von Tiefenfiltern, wird ein Lüfter verwendet, der bevorzugt als Radialventilator ausgeführt ist. Der Lüfter befindet sich bevorzugt im Gehäuse der Filtereinheit. Das Gehäuse der Filtereinheit besteht bevorzugt aus sogenannten Sandwichplatten, bei denen bspw. ein etwa 30 bis 50 Millimeter starker Kern aus thermisch isolierender Mineralwolle von verzinktem Blech umschlossen ist. Diese Bauart ist mechanisch stabil, wetterfest und verhindert vorteilhafterweise den Ausfall von Kondensat durch ein zu starkes Auskühlen des Rauchgases. Der Lüfter kann optional auch als Starthilfe für die Feuerung betrieben werden: wenn dieser beispielsweise über einen Funkschalter vor dem Anzünden für eine gewisse Zeitspanne vorteilhafterweise auf voller Leistung aktiviert wird, kann dadurch der Unterdruck im Kamin in einer solchen Weise aufgebaut werden, dass beim Starten des Ofens kein störender Qualm aus dem Ofen austritt. Dies ist besonders bei kurzen Kaminlängen und warmen Witterungsverhältnissen zum Teil hilfreich, um einen Rauchaustritt in den Wohnraum zu verhindern.

Die erfindungsgemäßen Lösungen sind in erster Linie, gemäß den gesetzlichen Anforderungen der 1. BImSchV, zur Abscheidung von Feinstaub aus dem Abgas von Feststoff-Kleinfeuerungsanlagen einzusetzen. Im Text der 1. BImSchV ist von Feinstaub als abzuscheidende Zielgröße die Rede. Im Praxisversuch hat sich dagegen überraschend herausgestellt, dass gemeinsam mit dem Feinstaub auch Kondensatbestandteile wie Teere mit abgeschieden werden.

Gemäß einer bevorzugten Ausgestaltung einer der vorgenannten Ausführungen mit mindestens zwei räumlich getrennten Baugruppen ist vorgesehen, dass der freie Strömungsquerschnitt der ersten Verbindungseinheit (38) und/oder der zweiten Verbindungseinheit (48) geringer ist als der freie Strömungsquerschnitt des Anschlussrohrs der Absaugeinheit an den Rauchgasweg. Durch Verwendung dieser kleineren Querschnitte können die Verbindungselemente erheblich material- und platzsparender und besser montierbar ausgeführt werden. So liegt beispielsweise der Durchmesser des Anschlussrohres bei vielen Kaminen in der Praxis in einem Bereich von etwa 130 mm bis 150 mm. Die Innendurchmesser der Verbindungselemente können vorteilhafterweise in den Größen DN 100, DN 80, DN 65, DN 50 oder sogar geringer ausgeführt werden. Die Vorteile hinsichtlich Materialeinsatz und Handhabbarkeit sind insbesondere bei einer doppelten Leitungsführung und mit einer jeweils zusätzlichen Isolierschicht gegeben.

Vorteilhafterweise ist ferner vorgesehen, dass die Absaugöffnung entlang eines Rohrumfangs der Absaugeinheit und/oder dass die Rezirkulationsöffnung entlang eines Rohrumfangs der Rezirkulationseinheit ausgeführt ist. Dies hat den Vorteil, dass eine möglichst große Menge an zu reinigendem Rauchgas der Filtereinheit zugeführt und von dieser, nach erfolgter Reinigung, zurück zur Rezirkulationseinheit geführt werden kann.

Vorzugsweise ist ein im unteren Bereich der Absaugöffnung oder ein unterhalb der Absaugeinheit angeordneter Temperaturfühler vorgesehen, welcher vorteilhafterweise dazu eingerichtet ist, bei Überschreiten einer vordefinierten Temperatur des Rauchgases oder eines typischen Temperaturgradienten den Lüfter zu aktivieren. Dadurch wird ein unnötiger Betrieb des Lüfters vermieden. Die Steuerung über den Temperaturgradienten hat den Vorteil, dass ein fester Temperaturwert für den Start des Lüfters so hoch gewählt sein sollte, dass er nicht versehentlich im Hochsommer bei starker Sonneneinstrahlung erreicht wird. Dieser hohe Wert birgt jedoch im Winter das Problem, dass der Lüfter erst vergleichsweise spät eingeschaltet wird und relativ viel Rauchgas ungefiltert an die Atmosphäre abgegeben wird. Auch eine weitere Ausführung, wie bspw. eine Kombination aus festem Temperaturwert in Kombination mit einem Abgleich über die Umgebungstemperatur oder über eine Zeitfunktion, die Sommer- und Winterbetrieb ermöglicht, sind möglich.

Bei einer rauchgasseitigen Überschreitung der maximal zulässigen Betriebstemperatur, insbesondere für die Filterelemente, kann der Ventilator vorteilhafterweise abgeschaltet oder gedrosselt werden, um so, auch in Kombination mit anderen Kühlmaßnahmen, eine unzulässige Überhitzung der Filtereinheit wirksam zu unterbinden. In diesem Fall kann das Rauchgas kurzzeitig ungefiltert komplett oder teilweise an die Atmosphäre abgeleitet werden.

Die normale Rauchgastemperatur bei gemauerten Bestandskaminen liegt, mit gewissen Schwankungsbreiten, häufig im Bereich um etwa 100°C. Bei isolierten metallischen Doppelrohrausführungen liegen die Rauchgastemperaturen, aufgrund des geringen Wärmeverlustes, höher. Die für erfindungsgemäß zum Einsatz kommende Filtermaterialien zulässigen Betriebstemperaturen liegen in der Regel häufig im Bereich von 100°C bis 200°C. Die Beschränkung der Betriebstemperatur kann, wie bei Kunstfaserfilter, aus dem Filtermaterial selbst her kommen, oder bei künstlichen Mineralfasern, wie Glaswolle, durch die Bindemittel bedingt sein.

Zur Erläuterung hier das folgende Beispiel: Bei einem gemauerten Kamin beträgt die maximale Rauchgastemperatur während eines normalen Holzabbrandes am Ende des Rauchgaswegs 120°C. Das temperatursensibelste Bauteil ist in diesem Beispiel das Filtermedium des Filterelements (50). Als Filtermedium wird ein Kunststoffgewebe verwendet, das vom Hersteller bis 180°C freigegeben ist. Aus Sicherheitsgründen soll dieses Filtermaterial nur bei Temperaturen von maximal 160°C betrieben werden. In diesem Fall beträgt die maximale Betriebstemperatur (des Filtermediums) 160°C.

Als Übertemperaturen in Bezug auf das Filtermedium werden daher Rauchgas-Temperaturen in der Nähe des Filtermediums oberhalb von 160°C angesehen.

Das von der Feuerung kommende Rauchgas wird auf dem Weg bis zum ersten Kontakt mit dem Filtermedium beispielsweise durch Wärmeverluste über die Wandungen der Feinstaubabscheidevorrichtung, über den Eintrag von Falschluft und/oder teilweise abgekühltem rezirkuliertem gereinigtem Abgas abgekühlt. Erst wenn die Rauchgastemperatur beim ersten Kontakt mit dem Filtermedium 160°C überschreitet, liegen in diesem Beispiel Übertemperaturen des Rauchgases vor. Der Begriff der Übertemperatur des Rauchgases ist daher individuell zu sehen und kann i.d.R. nicht als fester Wert für eine Vielzahl von Anwendungen angegeben werden.

Bezeichnend für das Vorliegen von Übertemperaturen des Rauchgases ist, dass die Feinstaubabscheidevorrichtung diese, bevorzugt frühzeitig vorher, erkennen soll, um ihnen durch geeignete Kühlungsmaßnahmen entgegenzuwirken, um eine thermische Schädigung von Teilen der Vorrichtung (in diesem Beispiel des Filtermediums) zu verhindern.

Wenn diese Übertemperaturen des Rauchgases wenig ausgeprägt und kurzfristig sind (kurze und geringfügige Temperaturspitzen), dann kann die Feinstaubabscheidevorrichtung unter Umständen den Filtrationsbetrieb aufrecht erhalten, indem für zusätzliche Kühlung des Rauchgases gesorgt wird, beispielsweise durch Öffnung von Falschluftklappen oder durch Erhöhung der Lüfterdrehzahl so, dass mehr Falschluft angesaugt wird. Die Steuerung der Feinstaubabscheidevorrichtung kann bereits vor der Überschreitung der Rauchgastemperatur in Filternähe von 160°C reagieren, um die Kühlung rechtzeitig einzuleiten, beispielsweise über einen Voralarmwert von 150°C oder durch Analyse des Gradienten der Rauchgastemperatur, durch den insbesondere der schnelle Anstieg bei Temperaturspitzen erkannt wird. Diese kurzzeitigen Temperaturspitzen können beispielsweise auftreten, wenn die Ofenklappe geöffnet wird, um Holz nachzulegen, insbesondere dann, wenn der Ofen zuvor mit gedrosselter Luftzufuhr betrieben wurde. Das Feuer kann in diesem Fall kurzzeitig auflodern, so dass es zu einer kurzzeitigen Temperaturspitze des Rauchgases kommt.

Die Übertemperaturen des Rauchgases können auch über einen längeren Zeitraum und stärker ausgeprägt vorkommen. Dies kann der Fall sein, wenn beispielsweise Störungen des Normalbetriebs vorliegen, wie eine undichte oder nicht korrekt schließende Ofentür, oder diese Tür nicht vorschriftsmäßig geschlossen wird - sei es aus einem Bedienungsfehler des Betreibers oder weil die Tür beispielsweise von der herausstehenden Ascheschublade in einem mit Asche überfüllten Raum blockiert wird. In diesen Fällen gelangt eine größere Menge an Verbrennungsluft über einen längeren Zeitraum in den Ofenraum, so dass die Rauchgastemperatur tendenziell zeitlich länger und in der Amplitude höher ausgeprägt ausfallen kann. Die hieraus möglicherweise resultierenden Übertemperaturen des Rauchgases sind für die Feinstaubabscheidevorrichtung tendenziell schwieriger durch zusätzliche Kühlmaßnahmen des Rauchgases (bspw. Falschluft über Klappen oder erhöhte Ventilatordrehzahl) auszugleichen.

Alternativ zur Reaktion der Feinstaubabscheidevorrichtung auf hohe Rauchgastemperaturen können auch alle Teile so ausgeführt sein, dass sie diesen hohen Temperaturen widerstehen. Auch wenn die Rauchgastemperatur hier die gleiche wie bei den zuvor beschriebenen Übertemperaturen sein kann, wird an dieser Stelle nicht von Übertemperaturen gesprochen, da durch die temperaturfeste Ausführung der Teile eine thermische Schädigung ausgeschlossen wird. Beispiele für temperaturfeste Ausführungen sind Hochtemperatur-Edelstahl-Tiefenfilter, die Betriebstemperaturen von etwa 1.000°C zulassen, oder die Anordnung von Lüftern außerhalb des Rauchgasstroms, die die Druckdifferenz über das Injektorprinzip (ähnlich Jet-Pulse-Filtern, vgl. Bernoulli-Prinzip, ohne separate bildliche Darstellung) erzeugen. Die Temperaturen von etwa 1.000 °C können lokal begrenzt am Filtermedium, bspw. beim Abbrennen des abgeschiedenen Feinstaubes auftreten. Daher können erfindungsgemäß auch Lüfter für geringere Betriebstemperaturen als 1.000 °C eingesetzt werden, da der Lüfter bei geeigneter Anordnung nicht mit diesen hohen Temperaturen beaufschlagt wird und zusätzlich bspw. mit Falschluft gekühlt werden kann.

Vor dem Hintergrund, dass die Sonderbetriebszustände der hohen Temperaturen (bzw. Übertemperaturen), schon alleine aus Gründen der Energieeffizienz der Feuerungen verhältnismäßig selten vorkommen, erscheint die temperaturfeste Ausführung möglichst aller Bauteile als die technisch sicherste, jedoch auch teure Lösungsmöglichkeit.

Neben den vorgenannten Übertemperaturen soll die erfindungsgemäße Vorrichtung auch so ausgeführt sein, dass sie bei der maximalen Betriebsstörung wie einem Kaminbrand, bei dem Temperaturen von etwa 1.000°C zu erwarten sind, möglichst nicht selbst thermisch zerstört wird und nicht zu einer Ausbreitung von Gefahrenquellen, wie beispielsweise durch herabtropfendes brennendes Plastik, führt.

Sowohl die Thermoelemente als auch der Stahl des Anschlussstückes und Bypassweges halten Betriebstemperaturen von etwa 1.000°C generell aus. In diesem Extremfall wird der Ventilator abgeschaltet, so dass kein heißes Rauchgas in die Filtereinheit gelangt. Als weiterer thermischer Schutz der Filtereinheit 60 und insbesondere des Filterelements 50 wirkt bei der Ausführung mit zwei separaten Baugruppen der räumliche Abstand zwischen Absaugeinheit und Filtereinheit sowie eine gegen Null gehende Wärmeleitung über die Verbindungselemente (38, 48).

Die Temperaturmessungen erfolgen bevorzugt durch Thermoelemente, aber auch andere Formen wie bspw. Thermofühler, Bimetallschalter, Thermoschalter, Infrarotmessungen, Infrarotkameras, Schmelzdrähte etc. sind möglich und sind Bestandteil dieser Erfindung, auch wenn sie nicht explizit genannt werden. Der Einfachheit halber werden hier die Begriffe Thermoelement und Temperaturfühler als gegeneinander austauschbar betrachtet, ebenso wie die Begriffe Lüfter und Ventilator.

Bei der Ausführung in einer Baugruppe für Absaug- und Filtereinheit ist zwischen der Filtereinheit auf der einen Seite und Absaugeinheit, dem Bypassweg und der optional vorhandenen Rezirkulationseinheit eine thermische Trennung 22 vorhanden, die vorzugsweise zumindest überwiegend aus künstlichen Mineralfasern und besonders bevorzugt aus Steinwolle besteht.

Bei der erfindungsgemäßen Vorrichtung tritt ein thermischer Schutz-Mechanismus in Kraft, wenn das Übertemperaturkriterium zutrifft, d.h. die maximal zulässige Gastemperatur, insbesondere im Bereich der Filterelemente, überschritten wurde, oder eine Vorwarnstufe der maximal zulässigen Temperatur überschritten wurde, oder sich eine der vorgenannten Überschreitungen aufgrund des Temperaturgradienten andeutet.

Bei der Ausführung der Erfindung mit mindestens zwei räumlich voneinander getrennten Baugruppen für Absaugeinheit und Filtereinheit, die mittels Verbindungseinheiten bzw. -mitteln (38, 48) strömungstechnisch miteinander verbunden bzw. verbindbar sind, kann als einfachste Schutzreaktion der Lüfter ausgestellt werden. Es ist ebenfalls möglich, dass der Ventilator die Drehzahl so verringert, dass der gasseitige Wärmeeintrag in die Filtereinheit in Verbindung mit anderen, im Folgenden, für die Ausführung mit einer Baugruppe, genannten Maßnahmen und die Auskühlung über die Oberflächen des Gehäuses und der Verbindungselemente, so stark verringert wird, dass der Filterbetrieb mit verringerter Ansaugung aufrecht erhalten werden kann, ohne dass die zulässige Maximaltemperatur zumindest über einen längeren Zeitraum überschritten wird.

Bei der Ausführung der Erfindung mit einer gemeinsamen Baugruppe für Absaugeinheit und Filtereinheit ist vorteilhafterweise eine thermische Trennung (22) zwischen der Filtereinheit und dem Bypassweg vorgesehen. Diese thermische Trennung besteht vorzugsweise hauptsächlich aus künstlichen Mineralfasern und bevorzugt zumindest überwiegend aus Steinwollen.

Die im Folgenden aufgeführten weiteren Maßnahmen zum thermischen Schutz sind unabhängig von der Ventilatordrehzahl und sie sind exemplarisch zu verstehen und nicht einschränkend für die Erfindung gemeint. Weitere im Folgenden nicht explizit genannte Maßnahmen mit vergleichbarem Kühlungseffekt zählen ebenfalls zu den thermischen Schutzmaßnahmen.

Drosselung des Gaswegs, bevorzugt im Absaugweg zwischen Absaugelement und Filterelement:

Als Drossel werden hier reversible sowie irreversible Einflussmöglichkeiten auf den Strömungswiderstand durch das Filterelement verstanden, bspw. Klappen, Verschluss mit aufquellender Masse (Zweikomponenten, Polyurethan) beispielsweise ausgelöst durch Schmelzsicherung etc..

Auch eine Drosselung bspw. im Bereich strömungstechnisch nach dem Ventilator wirkt sich schützend für die Filterelemente aus, da bei behinderter Gasabfuhr weniger bis kein Gas in die Filtereinheit nachströmen kann und somit die Wärmezufuhr in des Filterelement verringert oder unterbunden ist. Ein Abtrennen des bzw. der Verbindungselemente (38, 48) wird in diesem Zusammenhang ebenfalls als Drosselung des Gaswegs angesehen.

Kühlung durch Falschlufteintrag, bevorzugt in Strömungsrichtung vor der Filterelementen (50), durch zusätzliche Öffnung(-en) und/oder zusätzliche(n) Ventilator(en).

Kühlung durch Kühlmittel, bevorzugt Wasserquench, bevorzugt in Strömungsrichtung vor den Filterelementen (50).

Öffnung von (Not-)Klappen, so dass die heißen Rauchgase direkt vor dem Kontakt mit dem Filtermaterial an die Atmosphäre abgeleitet werden.

Vorzugsweise ist als Filterelement ein Tiefenfilter vorgesehen, welches dazu eingerichtet ist, Feinstaub, Kondensat und/oder Kondensatbestandteile abzuscheiden. Ein derartiges Tiefenfilter bietet im Bereich der Partikelgröße von Feinstäuben aus Kleinfeuerungsanlagen ein deutlich besseres Verhältnis aus bzw. von Abscheideleistung und Standzeit als andere Filterarten, wie beispielsweise Oberflächenfiltern .

Vorteilhafterweise umfasst das Filterelement ein Filter gemäß der Filterklasse G4, M5, M6, F7 bis F9 und/oder E10 bis E12 der DIN EN 779 (2012).

Gemäß einer bevorzugten Ausgestaltung ist als Filterelement ein Vorfilter gemäß der Filterklasse M5 oder M6 und ein Feinfilter gemäß der Filterklasse F7 bis F9 vorgesehen, wobei zwischen dem Vorfilter und dem Feinfilter eine Trennschicht vorgesehen werden kann, die vorzugsweise aus einem grobporigen Material besteht, insbesondere um Verklebungen an der Grenzschicht zwischen den Filterelementen zu verhindern. Durch eine derartige Anordnung wird eine mehrstufige Filterung erreicht, welche zu einem hohen Grad der Reinigung des Rauchgases führt. Filtermaterialien die nicht gemäß DIN EN 779 (2012) in diese vorgenannten Arten von Filterklassen klassiert sind, werden bei vergleichbarer Abscheideleistung im Sinne dieser Erfindung als gleichwertig betrachtet. Auch bei anderen oder gar keinen Bezeichnungen der Filterklasse gelten diese gleichwertigen Filter als erfindungsgemäß nutzbar. Erfindungsgemäß und für eine erfindungsgemäße Nutzung gilt die Definition von Filterklassen gemäß DIN EN 779 (2012), wie beispielsweise M5, M6, F7, F8, auch für andere Filtermaterialien ohne explizite Spezifikation der Filterklasse gemäß dieser Norm, sofern diese Filtermaterialien über eine vergleichbare Abscheideleistung verfügen.

Alternativ dazu kann vorteilhafterweise als Filterelement eine Reihenschaltung eines separat angeordneten Vorfilters und eines separat angeordneten Feinfilters vorgesehen sein, wobei das Vorfilter und das Feinfilter mittels wenigstens einer Trennwand räumlich voneinander getrennt sind. Dies hat unter anderem den Vorteil, dass ein einfacherer Austausch des jeweiligen Filters möglich ist.

Eine weitere Ausgestaltung der Erfindung sieht vor, dass anstelle einer Reihenschaltung von Filtermaterialien unterschiedlicher Feinheit, beispielsweise grob/fein, grob/mittel/fein oder dergleichen, erfindungsgemäß auch sogenannte gradierte Filtermaterialien eingesetzt werden können. Diese Filtermaterialien verfügen vorteilhafterweise über unterschiedlich stark verdichtete Bereiche. In Strömungsrichtung des Gases nimmt die Verdichtung des Filtermaterials vorteilhafterweise zu, so dass eine Reihenschaltung, beispielsweise grob/fein oder grob/mittel/fein, innerhalb eines Stückes Filtermaterial erfolgen kann. Erfindungsgemäß ist ein gradiertes Filtermaterial daher als gleichwertig zu einer Reihenschaltung von einzelnen Filtermaterialien mit einzelnen Filterstufen anzusehen.

Vorzugsweise weist die Filtereinheit ein zusätzliches Filterelement für den Betriebsbeginn auf, welches dem Filterelement nachgeschaltet ist. Insbesondere bei einem Betrieb der Vorrichtung mit frischen bzw. neuen Feinstaubfiltern kann durch ein solches zusätzliches Filterelement eine zuverlässige Reinigung des Rauchgases erreicht werden.

Gemäß einer weiteren vorteilhafte Ausgestaltung sind in der Filtereinheit ferner ein Schalldämpfer und eine Umschalteinheit vorgesehen, wobei die Umschalteinheit dazu dient und vorteilhafterweise eingerichtet ist, dass Rauchgas während des Betriebs mit frischen Filtern so lange über das zusätzliche Filterelement zu leiten, bis der Druckverlust über das zusätzliche Filterelement einen vorgegebenen Druckverlust erreicht hat. Alternativ und/oder ergänzend zur Steuerung über den Druckverlust kann die Umschalteinheit vorteilhafterweise auch nach einer vorgegebenen Betriebszeit so schalten, dass das zusätzliche Filter umfahren bzw. umgangen wird. Bis zu diesem Zeitpunkt der Umschaltung sind die frischen Filterelemente (50), in Strömungsrichtung vor dem zusätzlichen Filter (78), in der Regel so stark beladen, dass sie eine ausreichend hohe Reinigungswirkung erzielen. Das Material des zusätzlichen Filters kann vorteilhafterweise aus einer Packung Mineralwolle oder Wolle, Baumwolle oder Leinen bestehen. Dieses Material wird nicht regeneriert und beim Wechsel der Filterelemente ausgetauscht und vorzugsweise thermisch entsorgt. Es kann erfindungsgemäß jedoch auch vorgesehen sein, dass das Gas parallel das zusätzliche Filterelement und den Schalldämpfer durchläuft oder sowohl das zusätzliche Filterelement als auch den Schalldämpfer durchläuft.

Vorzugsweise weist die Absaugeinheit (30) eine konische, sich nach unten aufweitende, Form auf. Dies hat den Vorteil, dass mit der Zeit auftretende Staubablagerungen besser vermieden werden können.

Gemäß einer weiteren bevorzugten Ausgestaltung umfasst die Filtereinheit ferner eine Entschwefelungseinrichtung, Geruchsabscheidungseinrichtung bzw. Einrichtung zur Abscheidung von vornehmlich krebserzeugenden Stoffen wie beispielsweise PAK (Polyzyklische Aromatische Kohlenwasserstoffe), BaP (Benzo[a]pryren) sowie PCDD/F (Dioxinen und Furanen) und eine Minderungsmöglichkeit von Kohlenmonoxid durch einen kombinierten Betrieb mit einer Vorwärmung der Verbrennungsluft der Feuerung gemäß DE 10 2014 015 491 A1 (Abgasluftwärmetauscheranordnung). Eine Abscheidung von Kohlenmonoxid ist auch beispielsweise durch den Einsatz von speziell hierfür imprägnierten Aktivkohlen und der Gleichen, wie sie auch in Atemschutzmasken eingesetzt werden, möglich.

Vorzugsweise umfasst die Filtereinheit ferner ein Formgebungselement, welches dazu eingerichtet ist, einem Zusammenfallen von Filterelementen entgegenzuwirken, insbesondere bei einem Betrieb der Vorrichtung mit geringen Volumenströmen. Ein solches Formgebungselement kann im Inneren von Filtertaschen oder als bspw. metallische Trennschicht zwischen einem Vorfilter und einem Feinfilter vorgesehen sein. Da sich auf diese Weise ein Zusammenfallen der Filterelemente vermeiden lässt, wird vorteilhafterweise die wirksame Filterfläche und damit die Standzeit erhöht. Ferner sinkt der Wartungsaufwand der Vorrichtung erheblich.

Ein besonderes Merkmal der Ausführungen mit mindestens zwei Baugruppen der vorliegenden Erfindung ist die bauliche Trennung von dem in dem in der Achse des Rauchgasstrom befindlichen Teils, bestehend aus Absaugeinheit und Rezirkulationseinheit und der Filtereinheit. Durch diese erfindungsgemäße Konstruktion entfällt vorteilhafterweise der separat konstruierte Bypassraum komplett, der aus Sicherheitsgründen für eine ungefilterte Abführung der Rauchgase an die Atmosphäre erforderlich ist und der bei anderen Feinstaubfilterkonzepten bisher erforderlich ist.

Diese erfindungsgemäße Ausführung gewährleistet vorteilhafterweise einen sicheren und robusten Betrieb ohne dass fehleranfällige Rauchgasklappen oder sonstige Drosselorgane benötigt werden. Durch die bauliche Trennung der Filtereinheit können erheblich größere Filterflächen verwendet werden als beispielsweise bei Feinstaubfilterkonstruktionen in einer Baugruppe, die direkt auf dem Kamin montiert werden.

Eine weitere Ausführung der Erfindung verfügt über Drossel- bzw. Absperrorgane für Luft bzw. Gas wie bspw. Rauchgasklappen.

Eine Variante der Erfindung verfügt zur Lenkung der Gasströme innerhalb der Vorrichtung mindestens eine Rauchgasklappe 24, wie sie beispielsweise in DE 10 2015 103 337 (Pos. 6) und DE 34 44 437 (Pos. 9 und 9') offenbart werden. In Fig. 31 ist die Rauchgasklappe 24 beispielhaft dargestellt. In dieser Ausführung kann sie vorteilhafterweise zur Drosselung oder Absperrung des Kernbereichs des Bypasses zwischen Ansaug- und Rezirukulationsöffnungen eingesetzt werden.

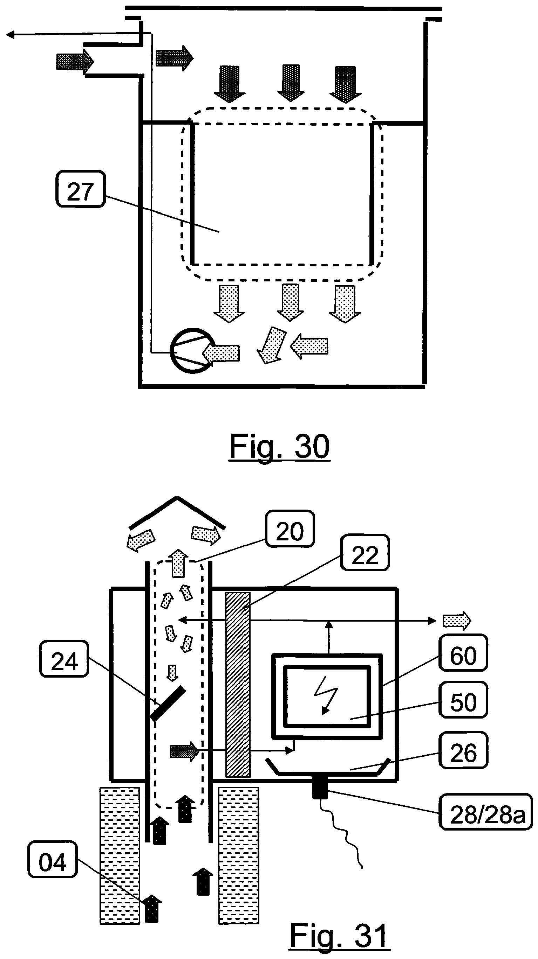

Bei der Ausführung in einer Baugruppe werden die Komponenten Absaugeinheit, optionale Rezirkulationseinheit und Filtereinheit in einer gemeinsamen Baugruppe bzw. einen gemeinsamen Gehäuse angeordnet, wobei vorteilhafterweise eine thermische Trennung (22) zwischen dem Bypassweg (20) und der Filtereinheit (60) bzw. dem Filterelement (50) vorgesehen ist, die bevorzugt aus künstlichen Mineralfasern und besonders bevorzugt aus Steinwolle besteht und die die temperaturkritischen Bauteile, wie beispielsweise das Filterelement bei rauchgasseitigen Übertemperaturen vor der Zerstörung schützt (beispielhafte Darstellung in Fig. 31).

Bei einer erfindungsgemäßen Konstruktionen mit einer Baugruppe ist bauartbedingt vorgegeben, dass diese die Maße des Kamins nicht wesentlich überschreiten können und auch in der Höhe begrenzt sind, sei es aus statischen Gründen, die beispielsweise die Windlast berücksichtigen und/oder aus optischen Gründen, aus denen ein Feinstaubabscheider, der oben auf einem Kamin montiert ist und diesen erheblich überragt, als störend empfunden würde. Bei einem durchschnittlichen Kaminaußenquerschnitt von 50 cm mal 50 cm ist es bei einer solchen Feinstaubfilterkonstruktion aufgrund der Geometrie und den Baumaßen 50 cm mal 50 cm mal 50 cm kaum möglich mit einem Filter mit einer Tiefe von etwa 20 mm eine Filterfläche von mehr als einem Quadratmeter unterzubringen, insbesondere wenn der erforderliche Raum für den Bypassweg (20) und die Seitenkammer mit Ventilator, Steuerung etc. abgezogen wird. Aus der geringen Filterfläche kann eine erhebliche Einschränkung der Standzeit resultieren, sofern das Filter nicht wirkungsvoll regeneriert bzw. abgereinigt werden kann.

Bei der erfindungsgemäßen Konstruktion mit zwei Baugruppen gibt es demgegenüber keine vergleichbare Limitierung der Filterfläche, so dass eine im Vergleich erheblich höhere Standzeit bereits ohne Abreinigung einfach durch eine Erhöhung der Filterfläche zu realisieren ist. Eine Ausführung der erfindungsgemäßen Vorrichtung in einer Baugruppe mit etwa den zuvor genannten ungefähren Abmaßen eines Würfels mit den Kantenlängen von 50 bis 60 cm und einer Standzeit von einer Heizperiode erscheint möglich, erfordert jedoch einen guten Abreinigungsmechanismus für das Filterelement 50 bzw. das Filtermedium.

Im Falle von Betriebsstörungen, wie beispielsweise Stromausfall oder mangelnder Wartung der Filterelemente, folgt bei dieser erfindungsgemäßen Lösung mit zwei Baugruppen das Rauchgas dem Weg in Verlängerung der Achse des ursprünglichen Rauchgasweges ohne Feinstaubfilter, beispielsweise dem Kamin - bei der Variante mit einer Baugruppe erfolgt dies über den internen Bypassweg (20).

Vorteilhafterweise wird das Rauchgas erfindungsgemäß nur im bestimmungsgemäßen Betrieb durch den in der Absaugeinheit herrschenden Unterdruck aus der Achse des ursprünglichen Rauchgasweges abgelenkt und der Filtereinheit zugeleitet.

Bei einer Vielzahl von Häusern befindet sich der Kamin und damit dein häufiger Montageort der Abscheidevorrichtung an unzugänglichen Stellen auf dem Dach, so dass eine erhöhte Absturzgefahr bei der Begehung besteht. Diese Absturzgefahr ist durch den Einsatz von geschultem Fachpersonal mit entsprechenden Sicherungsgurten etc. bis nahe und bevorzugt auf Null reduzierbar.

Die Komponenten sollten bei der erfindungsgemäßen Lösung, insbesondere bei schlechter Zugänglichkeit, steilen Dächern etc., ausschließlich von geschultem Fachpersonal mit den entsprechenden Sicherheitsvorkehrungen gewartet werden.

Die Filtereinheit (60) der erfindungsgemäßen Lösung ist ein vergleichsweise einfaches Bauteil. Wenn die erfindungsgemäße Filtereinheit auf einem gut zugänglichen Flachdach aufgestellt ist, könnte der Wechsel der Filterelemente insofern auch durch Laien erfolgen. Auch bei Schrägdächern gibt es Bauteile wie Trittstufen für Schornsteinfeger, Geländer Einsatzbauteile um beispielsweise Balkone nachzurüsten, so dass damit zumindest theoretisch eine Begehung auch durch Laien gefahrlos möglich wird. Die erfindungsgemäße Filtereinheit kann insofern unter günstigen Umständen auch durch handwerkliche versierte Laien mit speziellen Sicherheitsvorkehrungen gewartet werden. Bevorzugt sollte ein Austausch der erfindungsgemäßen Filterelemente jedoch durch Fachfirmen bzw. Fachpersonal erfolgen.

Weitere Einzelheiten, Merkmale und Vorteile der Erfindung werden nachfolgend anhand der in den Figuren der Zeichnungen dargestellten Ausführungsbeispiele näher erläutert. Dabei zeigen:

Fig. 1      ein Ausführungsbeispiel der Vorrichtung zur Filterung von Feinstaub in zwei Baugruppen, insbesondere Darstellung der Hauptkomponenten Kamin (10), Absaugeinheit (30), Filtereinheit (60), Rezirkulationseinheit (40), Verbindungseinheiten (38, 48), Regenschutz (16), Bypassweg (20) und den Kernbereich des Bypassweges (21);

Fig. 2      ein weiteres Ausführungsbeispiel der erfindungsgemäßen Vorrichtung in zwei Baugruppen, insbesondere mit Fluidwegen, vorliegend bei einer Auf-Dachmontage mit Rezirkulation;

Fig. 3      ein weiteres Ausführungsbeispiel der erfindungsgemäßen Vorrichtung in Teil-Explosionsdarstellung der Baugruppen;

Fig. 4      ein Ausführungsbeispiel der Absaugeinheit und der Rezirkulationseinheit, vorliegend Ausführung mit Rezirkulation und Montageart im Rauchrohr, beispielsweise zur Anwendung bei nachträglich installierten isolierten Rauchgasleitungen an den Außenseiten von Häusern;

Fig. 5 ein weiteres Ausführungsbeispiel der erfindungsgemäßen Vorrichtung, insbesondere mit Fluidwegen, vorliegend bei einer Auf-Dach-Montage, insbesondere mit Rohgasverdünnung mit rezirkuliertem warmem Reingas;

Fig. 6 ein Ausführungsbeispiel der Absaugeinheit, insbesondere mit Fluidwegen, vorliegend bei einer Auf-Dach-Montage, insbesondere Rohgasverdünnung mit kalter Umgebungsluft;

Fig. 7 ein Ausführungsbeispiel eines Rauchgasaustritts in die Atmosphäre bei einem Kamin ohne Absaugeinheit und ohne Rezirkulationseinheit;

Fig. 8 ein Ausführungsbeispiel eines Rauchgasaustritts in die Atmosphäre bei einem Kamin mit Absaugeinheit und ohne Rezirkulationseinheit, beispielsweise für Betriebsstörungen wie Stromausfall oder mangelnde Filterwartung;

Fig. 9 ein Ausführungsbeispiel eines Rauchgasaustritts in die Atmosphäre bei einem Kamin mit Absaugeinheit und mit Rezirkulationseinheit, beispielsweise für Betriebsstörungen wie Stromausfall oder mangelnde Filterwartung;

Fig. 10 ein erstes Ausführungsbeispiel einer Filtereinheit in seitlicher Schnittdarstellung mit Gehäuse (62), Wartungsdeckel (64), Filterelement (50), Ventilator (65), Rohgaseintritt (66) und Reingasaustritt (68);

Fig. 11 ein zweites Ausführungsbeispiel einer Filtereinheit, ähnlich Fig. 10, jedoch mit Seitenkammer (67), u.a. zur Rauchgasführung, und Funkenschutzgitter (29);

Fig. 11a alternative Ausgestaltung zu Fig. 11 (mit Drainageanschluß 63a und Feuchtesensor 61);

Fig. 12 ein drittes Ausführungsbeispiel einer Filtereinheit, vorliegend mit durch Trennwände (70) erzielter Reihenschaltung von Vorfilter (52) und Feinfilter (56), welche optional auch als hier nicht dargestellte Parallelschaltung von mindestens zwei bevorzugt gleichartigen Filterelementen (50) zur Erhöhung der Filterfläche und damit der Standzeiten sowie für den Einsatz bei größeren Feuerungen mit größeren Rauchgasvolumenströmen vorgesehen sein kann;

Fig. 12a ein viertes Ausführungsbeispiel einer Filtereinheit, ähnlich Fig. 12, jedoch mit mindestens einer vorteilhafterweise anströmseitig zum jeweiligen Filter (52, 56) angebrachten Einbringung von Precoatmaterial (71);

Fig. 13 ein Ausführungsbeispiel eines Zusatzfilters (78) mit Umschalteinheit (76) und/oder Schalldämpfers (72);

Fig. 14 ein Ausführungsbeispiel eines Filterelements (50) mit Vorfilter (52), Feinfilter (56) und Trennschicht (54);

Fig. 15 ein Ausführungsbeispiel einer Filtereinheit umfassend eine Entschwefelungsvorrichtung bzw. Geruchsminderungsvorrichtung bzw. Schadstoffabscheidungsvorrichtung, insbesondere in verschiedenen Varianten;

Fig. 16 ein erstes Ausführungsbeispiel der Vorrichtung zur Filterung von Feinstaub mit zwei getrennten Baugruppen für Filter- und Absaugeinheit mit entsprechenden Temperaturmessstellen mit Rezirkulationseinheit;

Fig. 16a ein zweites Ausführungsbeispiel der Vorrichtung zur Filterung von Feinstaub mit einer Baugruppen für Filter- und Absaugeinheit mit entsprechenden Temperaturmessstellen mit Rezirkulationseinheit;

Fig. 17 ein drittes Ausführungsbeispiel der Vorrichtung zur Filterung von Feinstaub mit zwei getrennten Baugruppen für Filter- und Absaugeinheit mit entsprechenden Temperaturmessstellen ohne Rezirkulationseinheit;

Fig. 17a ein viertes Ausführungsbeispiel der Vorrichtung zur Filterung von Feinstaub mit einer Baugruppen für Filter- und Absaugeinheit mit entsprechenden Temperaturmessstellen ohne Rezirkulationseinheit;

Fig. 18 ein erstes Ausführungsbeispiel eines Formgebungselements (58) innerhalb einer Filterelements (50), bestehend aus Vorfilter (52), Trennschicht (54) und Feinfilter (56), hier Darstellung im Längsschnitt durch eine Filtertasche;

Fig. 19 ein zweites Ausführungsbeispiel eines Formgebungselements (58) innerhalb einer Filtereinheit als Darstellung im Querschnitt durch mehrere nebeneinander befindliche Filtertaschen eines Filterelements (50), bestehend aus Vorfilter (52), Trennschicht (54) und Feinfilter (56);

Fig. 20   ein Ausführungsbeispiel für eine zusätzliche Temperaturerhöhung bzw. -verringerung des Rauchgases sowie eine weitere einfache Variante der Befestigung eines der Verbindungselemente (38, 48);

Fig. 21   ein Ausführungsbeispiel eines erfindungsgemäßen Filterelements, welches durch mechanische Bewegung abreinigbar ist;

Fig. 22   ein weiteres Ausführungsbeispiel eines erfindungsgemäßen Filterelements welches durch mechanische Bewegung abreinigbar ist;

Fig. 23   ein weiteres Ausführungsbeispiel eines erfindungsgemäßen Filterelements welches durch mechanische Bewegung abreinigbar ist;

Fig. 24   ein Ausführungsbeispiel eines erfindungsgemäßen Filterelements, mit Staubfangwannen, hier mit optionaler elektrischer Zündvorrichtung;

Fig. 25   ein weiteres Ausführungsbeispiel eines erfindungsgemäßen Filterelements, mit Staubfangwannen und optionaler elektrischer Zündvorrichtung;

Fig. 26   eine beispielhafte erfindungsgemäße Anordnung in zwei Baugruppen eines erfindungsgemäßen Feinstaubabscheiders, wobei ein elektrostatischer Abscheider zur Staubabscheidung eingesetzt wird und eine Druckmessung im Kamin erfolgt (in Kombination mit Filter und/oder E-Filter) und ein Auffangraum 26 für abgeschiedene Verschmutzungsfracht vorgesehen ist;

Fig. 27   eine beispielhafte Befestigung einer Absaugeinheit an einem Kamin;

Fig. 28   eine beispielhafte Ausführung einer Precoateinbringung in Patronenausführung, links mit Treibladung und rechts mit externer Druckgaszuführung;

Fig. 29   eine beispielhafte Ausführung der bevorzugt anströmseitig der Filtermaterialien vorgesehenen Einbringung von Benetzungsmitteln;

Fig. 30   eine beispielhafte Ausführung, bei der eine separate Geruchsminderung bzw. Schadstoffabscheidung vorgesehen ist; und

Fig. 31   eine beispielhafte Ausführung mit einer Baugruppe, bei der ein E-Filter als Filterelement 50 eingesetzt wird und bei der die abgeschiedene Verschmutzungsfracht in einen Auffangraum 26 abgereinigt werden kann, optional mit Austragsmöglichkeit für die Verschmutzungsfracht 28 bzw. das Kondensat 28a.

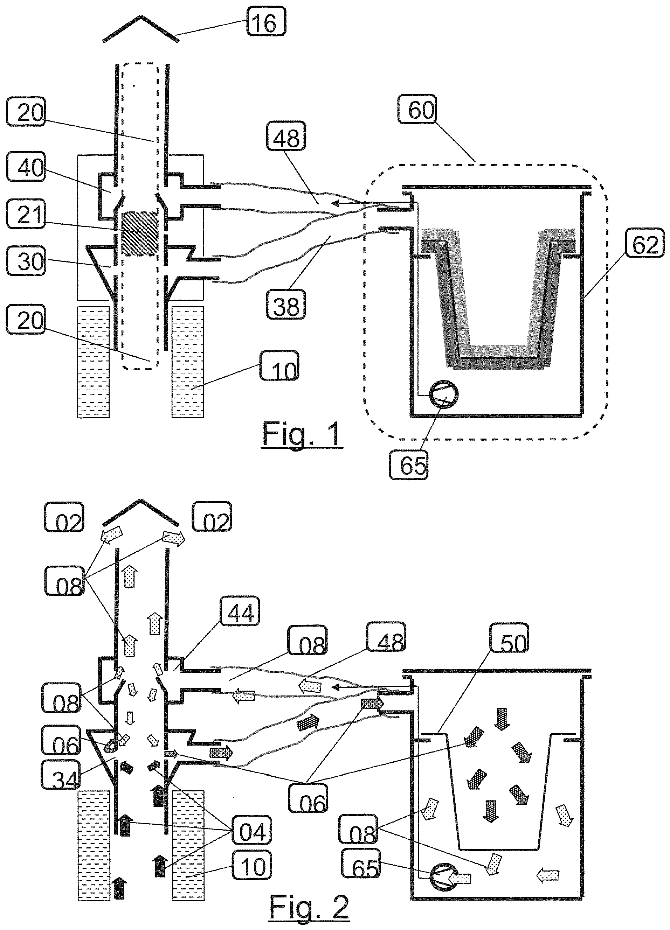

In Fig. 1 ist eine Gesamtübersicht einer Vorrichtung zur Filterung von Feinstaub dargestellt, welche eine Absaugeinheit 30, eine Rezirkulationseinheit 40 und eine Filtereinheit 60 umfasst. Die Absaugeinheit 30 ist dabei die erste Baugruppe, die in den Rauchgasweg 10 der Feuerungsanlage angeschlossen wird. Die Filtereinheit 60 als zweite, über ein Verbindungselement 38 angeschlossene Baugruppe beinhaltet mindestens ein Filterelement 50, welches beispielsweise als Tiefenfilter ausgeführt ist. Zur Überwindung des betriebsnotwendigen Differenzdrucks der Filtereinheit 60 kann ein Lüfter 65 verwendet werden, der bevorzugt als Radialventilator ausgeführt ist. Der Lüfter 65 befindet sich bevorzugt im Gehäuse 62 der Filtereinheit 60. Der Bypassweg 20 ist gestrichelt und dessen Kernbereich 21 schraffiert dargestellt. Dieser Kernbereich befindet sich zwischen der Öffnung 34 für den Rauchgasdurchtritt der Absaugeinheit 30 und der Öffnung zum Rauchgasdurchtritt 46 der Rezirkulationseinheit 40. Über den Bypassweg kann das Rauchgas abgeleitet werden, wenn es nicht oder nicht vollständig über die Absaugeinheit zur Filtereinheit geleitet werden kann, beispielsweise bei Stromausfall oder nicht gewarteten Filterelementen. Auf die optional vorgesehene Vorrichtung zur Reingas-Rezirkulation über die Verbindungseinheit 48 wird im weiteren Verlauf der Beschreibung näher eingegangen.

Der freie Strömungsquerschnitt der Absaugeinheit 30 und/oder der Rezirkulationseinheit 40 orientiert sich in erster Linie am freien Strömungsquerschnitt der Feuerungsanlage selbst, kann jedoch über definiert lange Strecken in gewissem Maße, beispielsweise durch Leitbleche der Absaugeinheit 30 und/oder Leitbleche 49 der Rezirkulationseinheit 40 verengt werden. Entscheidend ist, dass diese Verengung keine wesentlichen negativen Auswirkungen auf den Betrieb der Feuerungsanlage hat. Insbesondere darf sich durch eine Verengung nicht der Strömungswiderstand für die Abführung der Rauchgase in einem solchen Maße erhöhen, dass Rauchgas 4 aus der Feuerungsanlage, beispielsweise in den umgebenden Wohnraum austritt. Wenn ein solcher ungewollter Austritt von Rauchgas 4 ausgeschlossen werden kann, ist eine Einschnürung des Rauchgasweges in gewissem bzw. begrenztem Umfang zulässig. Es hat sich im Laufe der Entwicklung überraschend herausgestellt, dass diese strömungstechnisch sinnvollen Maßnahmen unter strenger Beachtung der Verhältnismäßigkeit ohne störende Wirkung auf den freien Abzug der Rauchgase und damit auf den ungestörten Betrieb de Feuerung bleiben, wenn die Leitbleche selbst eine strömungsgünstige Form aufweisen und nur über eine kurze Strecke der senkrechten Achse des Bypasswegs 20 mit möglichst geringer Eintauchtiefe in den Bypassweg ausgeführt sind.

Durch die erfindungsgemäße Konstruktion wird sichergestellt, dass bei inaktiver Rauchgasreinigungseinrichtung, beispielsweise bei Betriebsstörungen wie einem Stromausfall oder dem Vorhandensein verstopfter Filter infolge mangelnder Wartung, das Rauchgas an der Absaugeinheit 30 über den Bypassweg 20 vorbeiströmen kann und ungereinigt an die Atmosphäre abgeleitet werden kann. Bei den zuvor genannten Betriebsstörungen ist der Unterdruck, der für eine Ableitung der Rauchgase von durch die Absaugeinheit 30 über das Verbindungselement bzw. die Verbindungseinheit 38 in Richtung der Filtereinheit 60 sorgt, entweder bei verstopften Filtern zu gering oder bei Stromausfall nicht vorhanden.

Fig. 2 zeigt, analog zur Gesamtübersicht der Fig. 1, eine Darstellung der Gasströme während des Betriebs der Vorrichtung, wobei dunkle Pfeile ein Rohgas 4 mit einem hohem Feinstaubanteil von beispielsweise 100 mg/m$^3_N$ und helle Pfeile ein Reingas 8 mit einem geringem Feinstaubanteil von beispielsweise 10 mg/m$^3_N$ kennzeichnen. Die Umgebungsluft 2 mit einem Feinstaubanteil von beispielsweise 0 mg/m$^3_N$, eine Mischung aus Rohgas 4 vermischt mit rezirkuliertem Reingas 8 ist mit dem Bezugszeichen 6 gekennzeichnet und weist einen Feinstaubgehalt von beispielsweise 85 mg/m$^3_N$ auf. Das weiter in Fig. 2 dargestellte Filterelement 50 ist vorliegend als Taschenfilter ausgeführt und der Lüfter 65 ist beispielsweise ausgeführt als Radialventilator. Wird dieser Radialventilator, oder auch Halbradialventilator, betrieben, so entsteht durch den Unterdruck ein Gasstrom von Rauchgas 4, welcher durch die Absaugöffnung 34 der Absaugeinheit 30 zu Speicherfilteranordnungen, genauer durch das Filtermaterial in der Filtereinheit, geführt wird. Das Rauchgas 4 nimmt also bei Betrieb des Radialventilators nicht den weiterhin freien Weg entlang der Achse des Rauchgaswegs 10 von der Feuerung, sondern - aufgrund der Druckreduzierung in der Absaugeinheit 30 - den Weg durch die Filtereinheit 60, wobei Partikel der Verschmutzungsfracht abgeschieden werden. Bei diesem Abziehen von Rauchgas 4 kann ein in der Größenordnung vergleichbares Volumen auch durch die abstromseitige Öffnung der Absaugeinheit 30 abgezogen werden, so dass die Filteranordnungen von einem Gemisch aus Rauchgas 4 und rezirkuliertem Reingas 8 bzw. Umgebungsluft 2 (insbesondere bei Ausführung ohne Rezirkulationseinheit) durchströmt werden. Kommt es während des Betriebs der Feuerungsstätte zu einer verminderten Reinigungswirkung, beispielsweise durch Ausfall des Lüfters 65 oder durch das Zusetzen des Fasermaterials, ist in keinem Moment der gefahrlose Betrieb der Feuerungsstätte gefährdet. Statt den Weg über die Filteranordnungen der Filtereinheit 60 zu nehmen, nimmt dann das Rauchgas 4 ganz oder teilweise den ungefilterten Weg durch den inneren Teil der Rezirkulationseinheit Richtung Atmosphäre. Der äußere Teil der Rezirkulationseinheit mit dem Rezirkulationsraum 44 wird dabei nicht durchströmt.

Da der Radialventilator hinter dem Filterelement 50, also im Reingasweg angeordnet ist, kommt dieser mit Schmutzpartikeln aus dem Rauchgas 4 weniger in Kontakt, was zu einer Lebensdauererhöhung und Minderung der Wartungsintensität führt. In Abhängigkeit von der Verschmutzung sind die Filterelemente 50 nach einer definierten Anzahl von Betriebsstunden auszutauschen. Vorzugsweise ist vorgesehen, dass das Filtermaterial aus einer, beispielsweise bis 180 °C temperaturbeständigen Synthetikfaser, wie bspw. Polyester mit einer temperaturfesten Ausführung, besteht und als Tiefenfilter in Taschenform oder als Beutelfilter in Beutelform ausgeführt ist. Des Weiteren sind Ausführungen in Form von Filterschläuchen, Kassetten oder der Gleichen möglich.

Alternativ können auch künstliche Mineralfasern wie Glaswolle oder Mineralwolle zum Einsatz kommen. Ein Vorteil der Synthetikfaser besteht in der einfacheren Möglichkeit der Entsorgung über den Weg der allgemeinen Müllverbrennung.

Alternativ können die Filterelemente vorteilhafterweise auch als keramische oder metallische Filterfilterelemente ausgeführt werden. Keramische Filterelemente können beispielsweise sowohl in Form fester Filtermaterialien, wie beispielsweise in Filterkerzen als auch als flexible Keramikfasermatten oder als Formteile aus flexiblen Keramikfasermatten ausgeführt sein. Metallische Filterelemente können beispielsweise Metallfasern oder Metallgestricke aus dünnen Drähten enthalten. Bei Metallfiltern besteht die Möglichkeit der Reinigung der ausgebauten Filterelemente beispielsweise im Ultraschallbad. Im eingebauten Zustand können thermisch hoch beständige Metall- oder auch Keramikfilterelemente "freigebrannt" werden, in dem die abgeschiedenen kohlenstoffhaltigen Feinstäube kontrolliert mit hoher Temperatur und ausreichend Sauerstoff beaufschlagt werden. Dies kann beispielsweise über die Einbringung von Heißluft bzw. Heißgas über den Stutzen 94 oder eine separate elektrische Zündvorrichtung geschehen.

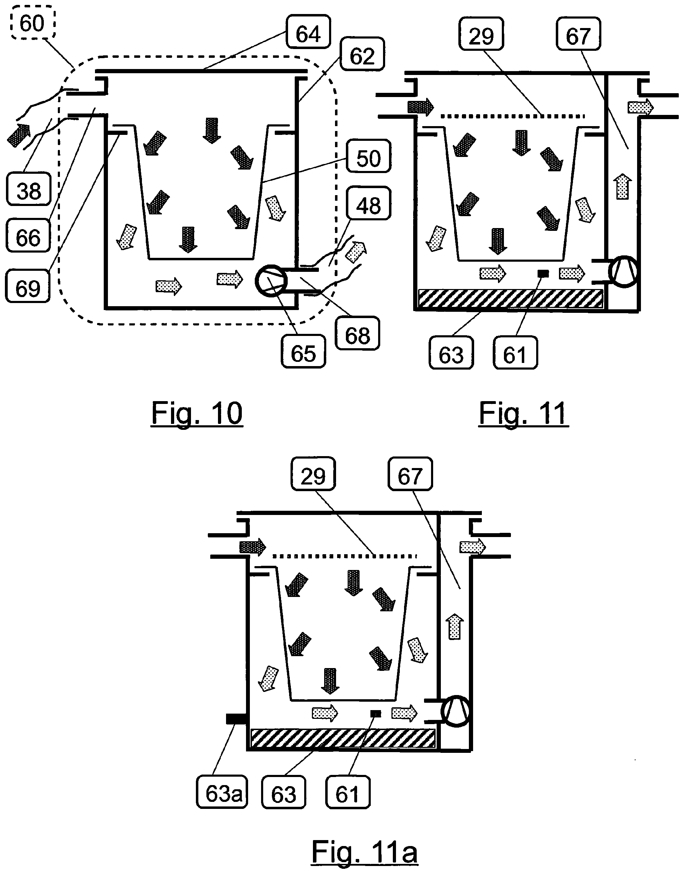

Vorliegend ist der Reingasaustritt 68 (in Fig. 2 verdeckt dargestellt; sichtbar beispielsweise in Fig. 10) so ausgebildet, dass wenigstens ein Teil des Reingases 8 über die Verbindungseinheit 49 und die Rezirkulationseinheit 40 in einen der Absaugeinheit 30 in Strömungsrichtung des Rauchgases 4 nachgeschalteten Bereich geleitet wird. Durch diese - teilweise oder vollständige - Rezirkulation von gereinigtem, warmem Rauchgas 8, wird die Mischtemperatur des in der Absaugeinheit 30 abgesaugten Gases 6 erhöht. Anstelle von kalter Frischluft 2 wird das von der Feuerung kommende Rauchgas 4 mit warmem rezirkuliertem Reingas 8 gemischt. Vorteilhaft bei dieser Erhöhung der Mischtemperatur des zur Filtereinheit geleiteten Gases ist insbesondere die Verminderung des Anfalls von kondensierender Feuchte - in Form von Wasser - aus dem Abgas.

Ein geringfügiger Anfall von Kondensat beim Anheizen der Feuerung und Start der kalten Filtereinheit gehört zum Normalbetrieb. Eine übermäßiges Auskondensieren von Feuchte ist während des Dauerbetriebs zu vermeiden, da anderenfalls eine Ansammlung von viel Wasser zum einen das Gewicht der Filtereinheit erhöhen und zum anderen bei einer längeren Phase des Nicht-Betriebs bei Frost das Gehäuse durch Eissprengung beschädigt werden kann. Bei geeigneter Betriebsführung kann bereits ausgefallenes Kondensat vorteilhafterweise wieder verdampft werden, so dass es zu keiner stetig steigenden Kondensatmenge kommt. Zur zusätzlichen Sicherheit kann ein Feuchtigkeitssensor 61 (Fig. 11) im Bodenbereich die Kondensatmenge überwachen. Oberhalb eines zulässigen Maximalwertes wird die Filtereinheit vorteilhafterweise außer Betriebs genommen und es kann ein Wartungshinweis an den Betreiber oder den Schornsteinfeger gesendet oder übermittelt werden, beispielsweise über eine Mobilfunkverbindung oder dergleichen.

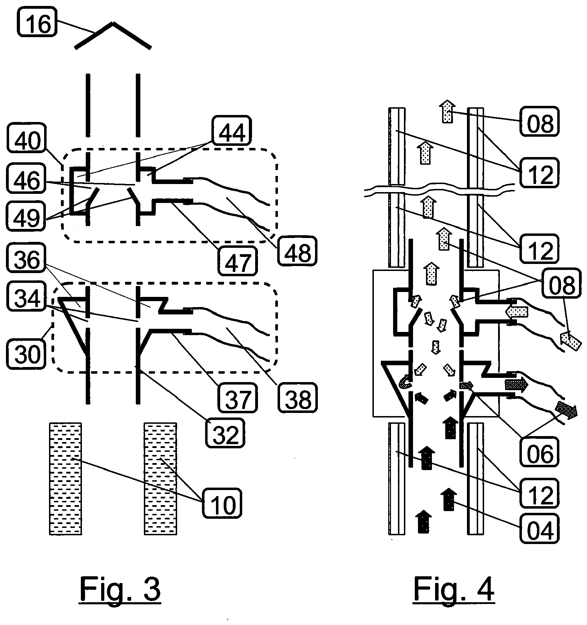

In Fig. 3 ist eine Übersichtsdarstellung einer Absaugeinheit 30 und einer Rezirkulationseinheit 40, welche auf einem Kamin 10 montiert sind, dargestellt. In Fig. 3 werden Teil der Absaug- und Rezirkulationseinheit detaillierter dargestellt, wie die Absaugöffnung(-en) 34, der Absaugraum 36, die Rezirkulationsöffnung(-en) 46, der Rezirkulationsraum 44 und die Leitbleche 49, die hier dem rezirkulierten gereinigten Rauchgasstrom eine bevorzugte Ausströmrichtung in Richtung der Atmosphäre geben. Der Anschluss des Absaugteils an den Rauchgasweg bzw. den Kamin ist hier exemplarisch über ein Anschlussrohr 32 dargestellt. Auch andere Anschlussarten sind ohne explizite Darstellung und Beschreibung möglich und Bestandteil der Erfindung.

In Fig. 4 sind gemäß einem weiteren Ausführungsbeispiel die Absaugeinheit 30 und die Rezirkulationseinheit 40 innerhalb eines Abgasrohres bzw. Rauchrohres 12 montiert, beispielsweise innerhalb eines isolierten Edelstahlkamins zur nachträglichen Montage an der Außenseite von Häusern. Erneut sind die jeweiligen Gasströme während des Betriebs der Vorrichtung dargestellt.

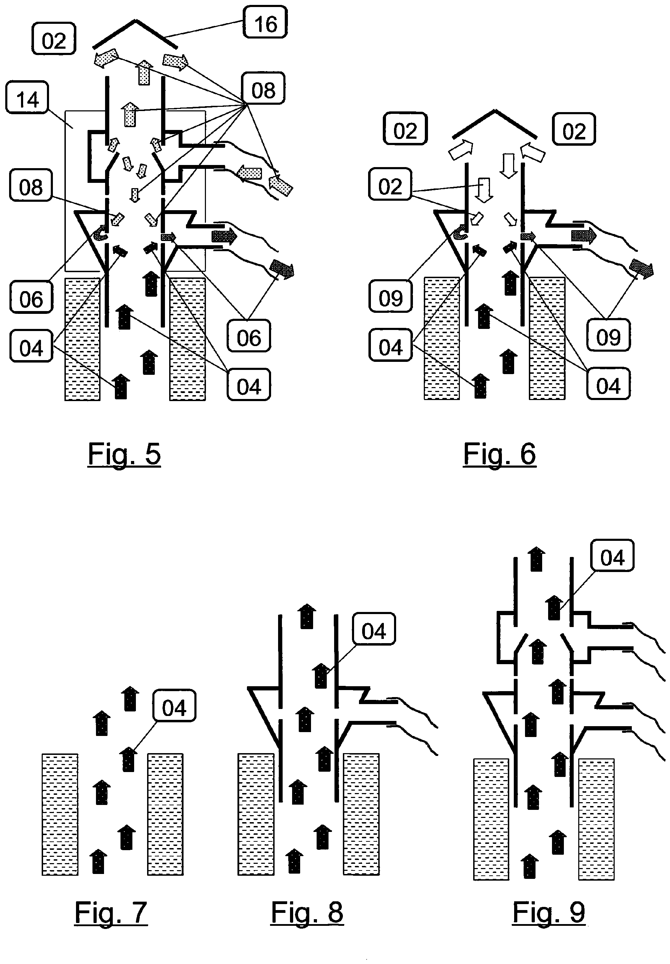

Fig. 5 zeigt eine Darstellung der Gasströme innerhalb einer Absaugeinheit 30 und einer Rezirkulationseinheit 40 während des Betriebes der Vorrichtung. Es ist insbesondere erkennbar bzw. dargestellt, dass die Mischung eines Rauchgases 4 mit rezirkuliertem Reingas 8 zu einem verdünnten Rohgas 6 führt. Die Absaugeinheit und die Rezirkulationseinheit werden hier beispielhaft von einem Wetterschutz mit Isolierung 14 umschlossen.

Fig. 6 betrifft eine Darstellung der Gasströme innerhalb einer Absaugeinheit 30 ohne die Rezirkulationseinheit 40. Es ist erkennbar, dass die Mischung eines Rauchgases 4 mit Falschluft 2 zu einem verdünnten Rohgas 9 führt.

In Fig. 7 ist aus einem Kamin ohne Absaugeinheit 30 und ohne Rezirkulationseinheit 40 in Atmosphäre austretendes Rauchgas 4 dargestellt, welches einen hohen Feinstaubgehalt von beispielsweise 100 mg/m$^3_N$ aufweist.

Fig. 8 zeigt wie ein Rauchgasstrom 4 an einem Kamin 10 mit Absaugeinheit 30 bei einer Betriebsstörung der Filtereinheit 60, beispielsweise bei Stromausfall oder Wartungsmangel an den Filtern, in die Atmosphäre austritt, da keine Ansaugen des Rauchgasstroms 4 durch die Filtereinheit 60 erfolgt.

Fig. 9 betrifft eine weitere Darstellung, in welcher ein Rauchgasstrom 4 an einem Kamin 10 mit Absaugeinheit 30 und mit Rezirkulationseinheit 40 bei Betriebsstörung der Filtereinheit 60 in Atmosphäre austritt.

In Fig. 10 ist ein Ausführungsbeispiel einer Filtereinheit 60 dargestellt, welche ein Filterelement 50, ein Gehäuse 62, einen Wartungsdeckel 64, einen Rohgaseintritt 66, einen Reingasaustritt 68, einen Lüfter 65 sowie beispielsweise als thermisch isolierter Metallschlauch ausgeführte Verbindungselemente 38 und 48 für Rohund Reingas umfasst.

Die Filterelemente 50 der Filtereinheit 60 sind vorzugsweise als sogenannte Taschenfilter ausgebildet. Die Ausführung als Taschenfilter stellt eine einfache, kostengünstige und beispielsweise in der Lüftungstechnik betriebsbewährte Konstruktion dar. Ein wesentliches Merkmal von Taschenfiltern ist, dass sie häufig nach dem Prinzip der Tiefenfiltration funktionieren und im Gegensatz zu Oberflächenfiltern häufig als nicht regenerierbar angesehen und auch so in der entsprechenden Fachliteratur beschrieben werden [vgl.: Löffler, Friedrich: Staubabscheiden, Zeitschrift / Reihe: Lehrbuchreihe Chemieingenieurwesen/ Verfahrenstechnik, Thieme-Verlag, Stuttgart, 1988, ISBN: 3137122015]. Bei der erfindungsgemäßen Abscheidung von Feinstäuben aus Feuerungsabgasen hat sich jedoch überraschend - und im Gegensatz zu der in der Fachliteratur und der Fachwelt vertretenen Einteilung in nicht regenerierbare Tiefen- bzw. Speicherfilter und regenerierbare Oberflächenbzw. Abreinigungsfilter - herausgestellt, dass die Taschenfilter, beispielsweise gegen Ende ihrer Standzeit, wenn der Druckverlust über das Filtermedium so groß geworden ist, dass eine vollständige Absaugung der von der Feuerung herkommenden Rauchgasmenge nicht mehr gewährleistet ist, vorteilhafterweise durch einfache mechanische Bewegung, vorzugsweise Klopfen, Vibration oder Schütteln, so weit regeneriert werden können, dass der zuvor sehr hohe Druckverlust stark verringert wird.

Dies ist umso erstaunlicher, da die im Tiefenfilter abgeschiedene Verschmutzungsfracht bei der erfindungsgemäßen Anwendung aus einer Mischung von (Fein-)Staub, unverbranntem Kohlenstoff (Ruß) und kondensiertem klebrigem Teer besteht. Auch das im Filter auftretenden Kondenswasser kann dazu führen, dass ein eher trockener Staub zu einer klebrigen und pastösen Schicht wird, die am Filtermedium haftet und sich sehr schlecht bzw. in der Regel gar nicht mehr von diesem ablösen lässt. Es ist allgemein bekannt, dass bereits bei zur Abreinigung konzipierten Oberflächenfiltern neben dem Trägergas und der Staubfracht das Auftreten von Wasser alleine bereits zu irreversiblen Störungen des Filtrationsprozesses führen kann, die einen Austausch der Filtermedien erforderlich machen. Wenn dann gleichzeitig noch klebrige Teerbestandteile im Filter anfallen, werden die Filtermedien um ein Vielfaches stärker geschädigt. Aus diesem Grund verwendet man in der Oberflächenfilteration auch sogenannte Precoatschichten, wie beispielsweise Kalk, als Filterhilfsmaterialien, die in den Gasstrom eingebracht eine trockene, poröse und leicht vom Filtermedium abzulösenden Schutzschicht aufbauen. Bei der Abreinigung des Oberflächenfilters nach dem Stand der Technik wird dann die trocken poröse Precoatschicht vom Filter abgereinigt, an deren anströmseitiger Oberfläche sich die feuchten und klebrigen Partikel angesammelt haben, ohne einen schädigenden Kontakt zum Filtermaterial gehabt zu haben. Es sind Anwendungen bekannt, bei denen auch die Zugabe einer großen Menge an Precoatmaterial das Filtermaterial eines Oberflächenfilters nicht vor dem gleichzeitigen Auftreten von Staub, Teer und Feuchte schützen konnte.

Umso erstaunlicher ist es, dass bei der erfindungsgemäßen Anwendung ein Tiefenfilter bereits ohne Precoatmaterial von der Verschmutzungsfracht Staub, Teer und Kohlenstoff unter gleichzeitigem Auftreten von Wasser abgereinigt werden kann, so dass der Druckverlust eines vollständig beladenen erfindungsgemäßen Tiefenfilters wieder auf einen Wert in der Nähe eines unbeladenen frischen Tiefenfilters fällt. Dieser unerwartete Effekt ist aller Wahrscheinlichkeit nach auf eine glückliche Kombination der verwendeten Filtermaterialien und vor allem Filterklassen für die Vor- und Feinfiltration zurückzuführen, durch die die abgeschiedenen Agglomerate der Verschmutzungsfracht einen wenig an den Filterfasern anhaftenden Staubkuchen bilden. Ein weiterer sich unterwartet positiv auswirkenden Umstand ist die Tatsache, dass die Tiefenfilterelemente bei der erfindungsgemäßen Anwendung mit erheblich geringeren Anströmgeschwindigkeiten betrieben werden als dies von den Herstellern vorgegebene wird: bei Einzelraumfeuerungen mit oft unterhalb von 50 $m^3_N$/h anstatt mit mehreren Tausende $m^3_N$/h, wie vom Hersteller oder in der Fachliteratur vorgegeben. Die Form der Ablagerungen der Verschmutzungsfracht an den einzelnen Filterfasern (Stichwort: Dendridenbildung) variiert mit der Auftreffgeschwindigkeit und der Umströmungsgeschwindigkeit der Partikel. In diesem speziellen Fall führt dies offensichtlich, unvorhergesehen und unvorhersagbar dazu, dass sich diese problematische Verschmutzungskombination aus Staub, Ruß, Teer und Wasser trotzdem von einem Tiefenfilter ablösen lässt.

Es wurde bis jetzt von der Fachwelt für unmöglich gehalten, dass Tiefenfilter regenerierbar sind, insbesondere dann, wenn sie zur Reinigung in Gasen mit klebrigen Bestandteilen (Staub, Wasser, Teer) eingesetzt werden und die Reinigung ohne den Zusatz von Filterhilfsstoffen (Precoatmateial) geschieht. Dies wird auch durch die Tatsache verdeutlicht, dass für die Kaminfilteranwendung bis zum heutigen Tage nur E-Filter am Markt verfügbar sind. In der Fachliteratur ist die allgemein verbreitete Einteilung in regenerierbare Oberflächen- bzw. Abreinigungsfilter und nicht regenerierbare Tiefen- bzw. Speicherfilter zu finden - speziell Wasser und Teer werden, in Verbindung mit Staub, allgemein als stark filterschädigend angesehen.

Auch andere Arten der Abreinigung, bei denen das Filtermedium im eingebauten Zustand regeneriert wird sind möglich, wie beispielsweise pneumatische Abreinigung durch Druckstoß (sog. "Jet-Pulse-Abreinigung) sowie durch Strömungsumkehr ("Rückspülen"). Tiefenfilter, auch Speicherfilter genannt, werden in der Fachliteratur den Abreinigungsfiltern, auch Oberflächenfiltern genannt, gegenübergestellt betrachtet. Sie werden unter anderem bei geringeren Volumenströmen und vergleichsweise geringer Staub-/Verschmutzungsfracht eingesetzt, insbesondere dann, wenn der abgeschiedene Staub nicht als Wertstoff zurückgewonnen werden soll, da sie den Staub etc. in der Tiefe des Filtermaterials einlagern [vgl.: Löffler].

Im Gegensatz zu den Tiefenfiltern werden Oberflächenfilter häufig bei großen Staub-/Verschmutzungsfrachten und großen Volumenströmen eingesetzt, insbesondere dann, wenn der abgeschiedene Staub als Wertstoff zurückgewonnen werden soll. Bei Oberflächenfiltern findet die Abscheidung an der Filteroberfläche statt, so dass beispielsweise durch Strömungsumkehr der an der Oberfläche abgeschiedene Staub abgeworfen werden kann.

Bei der Reinigung der Abgase von Feststoff-Kleinfeuerungsanlagen sind die Volumenströme vergleichsweise gering (bei Einzelraumfeuerungen deutlich unter 100 $m^3_N$/h), wobei die Staubgehalte um 100 mg/$m^3_N$ liegen und damit im Vergleich zu vielen industriellen Anwendungen ebenfalls gering sind. Der abgeschiedene Staub soll dabei nicht als Wertstoff zurückgewonnen werden. Damit erfüllen Tiefenfilter die Anforderungen der erfindungsgemäßen Aufgabe. Entscheidend für den praxisrelevanten Einsatz von Taschen-Tiefenfiltern zur Reinigung des Abgases von Feststoff-Kleinfeuerungsanlagen ist eine ausreichende Standzeit der Filterelemente. Idealerweise beträgt die Standzeit der Filterelemente ein Jahr bzw. eine Heizperiode, so dass der Wechsel der Filterelemente beispielsweise durch einen Schornsteinfeger bei jährlicher Reinigung auch außerhalb der Heizperiode erfolgen kann.

Typische marktgängige Größen von Taschenfilterelementen der Lüftungstechnik, die auch für die Reinigung des Abgases von Feststoff-Kleinfeuerungsanlagen eingesetzt werden könnten, sind Rahmenmaße von 598 mm x 598 mm mit sechs bis zehn Taschen und einer Taschentiefe zwischen 360 mm und 600 mm. Ein solches Filterelement mit sechs Taschen und 500 mm Taschentiefe hat eine Filterfläche von etwa 3,6 m² (0,598m x 0,5m x 6 Taschen x 2 Seiten pro Tasche = 3,6 m²). Im Allgemeinen werden solche Filterelemente herstellerseitig für den Betrieb mit mehreren Tausend Kubikmetern pro Stunden spezifiziert und vertrieben.

Fig. 11 zeigt gemäß einem weiteren Ausführungsbeispiel eine Filtereinheit 60 mit einer Seitenkammer 67, welche für die Gasführung und/oder die wettergeschützte Unterbringung eines Lüfters 65 und/oder einer Steuereinheit vorgesehen ist. Ferner ist eine Bodenmatte 63 vorgesehen, welche zur Aufnahme von Kondensat während der kalten Anfahrphasen und zur späteren Verdampfung bei zunehmender Betriebstemperatur dient und beispielsweise als Mineralwollmatte ausgeführt ist. Erfindungsgemäß ist vorgesehen, dass am Filterboden eine Bodenmatte (63) zur Aufnahme und späteren Verdampfung von beim Anfahren anfallenden Kondensat angebracht oder angeordnet ist, und/oder wobei ein Feuchtesensor (61) im Bereich des Filterbodens zur Erkennung von übermäßigem Kondensatausfall vorgesehen ist, und/oder wobei entstehendes Kondensat über einen Drainageanschluss (63a) abgeführt und/oder durch einen Feuchtesensor (61) detektiert und gemeldet werden kann. Mindestens ein im Bodenbereich installierter Feuchtesensor 61 dient der zusätzlichen Sicherheit gegen übermäßige Ansammlungen von Kondensat. Wird ein unzulässig hoher Kondensatstand detektiert, kann eine Warnmeldung an den Betreiber oder den Schornsteinfeger erfolgen, beispielsweise über eine Mobilfunknetzverbindung oder dergleichen, und es kann der Ventilator außer Betrieb genommen werden um einen weiteren Eintrag von Kondensat zu verhindern. Alternativ und/oder ergänzend kann Kondensat über einen Drainageanschluß 63a (vgl. Fig. 11a) abgeleitet werden und beispielsweise in Drainagebeutel aufgefangen werden.

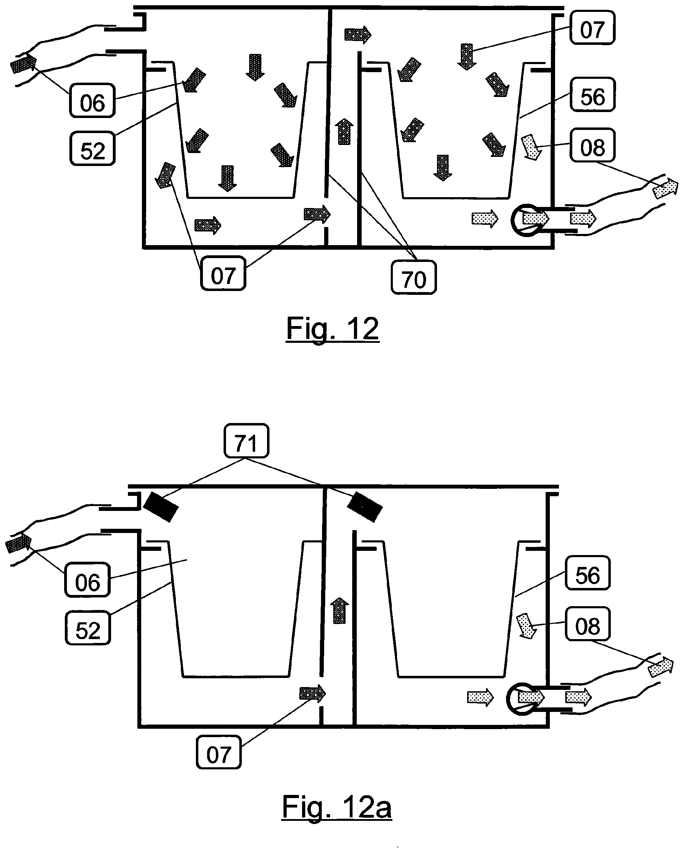

Fig. 12 zeigt ein weiteres Ausführungsbeispiel einer Filtereinheit 60 mit zwei in Reihe geschalteten Filtern, nämlich einem Vorfilter 52 und einem Feinfilter 56, sowie zwei zwischen Vorfilter 52 und Feinfilter 56 angeordneten Trennwänden 70. Das Vorfilter 52 reinigt ein mit rezirkuliertem Reingas verdünntes Rohgas 6, beispielsweise mit einem Feinstaubgehalt von 85 mg/m$^3_N$. Daraus resultiert ein vorgereinigtes Rohgas 7 mit einem Feinstaubgehalt von beispielsweise 50 mg/m$^3_N$. Nach Filterung durch das Feinfilter 56 wird ein Reingas 8 gewonnen, welches einen Feinstaubgehalt von beispielsweise 10 mg/m$^3_N$ aufweist. Dadurch wird eine erhöhte Abscheideleistung und eine Erhöhung der Standzeit der Tiefenfilter erreicht. Vorfilter fungieren zur Abscheidung der eher groben Verschmutzungsfracht, wobei Feinfilter hingegen der Reinigung auf die gewünschte Reinheit des Abgases dienen. Als in der Praxis vorteilhaft haben sich hierbei gemäß EN 779 (2012) die Filterklassen G4, M5 sowie M6 als Vorfilter und F7 bzw. F8 als Feinfilter erwiesen.

Fig. 12a zeigt ein weiteres Ausführungsbeispiel einer Filtereinheit 60, ähnlich Fig. 12, mit zwei in Reihe geschalteten Filtern, nämlich einem Vorfilter 52 und einem Feinfilter 56, jedoch mit mindestens einer anströmseitig vom Filter angebrachten Einbringung von Precoatmaterial 71. Es kann auch nur eine Einbringung von Precoatmaterial anströmseitig von Vorfilter 52 installiert sein. Eine Ergänzung um eine anströmseitig vom Feinfilter 56 angebrachte weitere Einbringung von Precoatmaterial ist möglich.

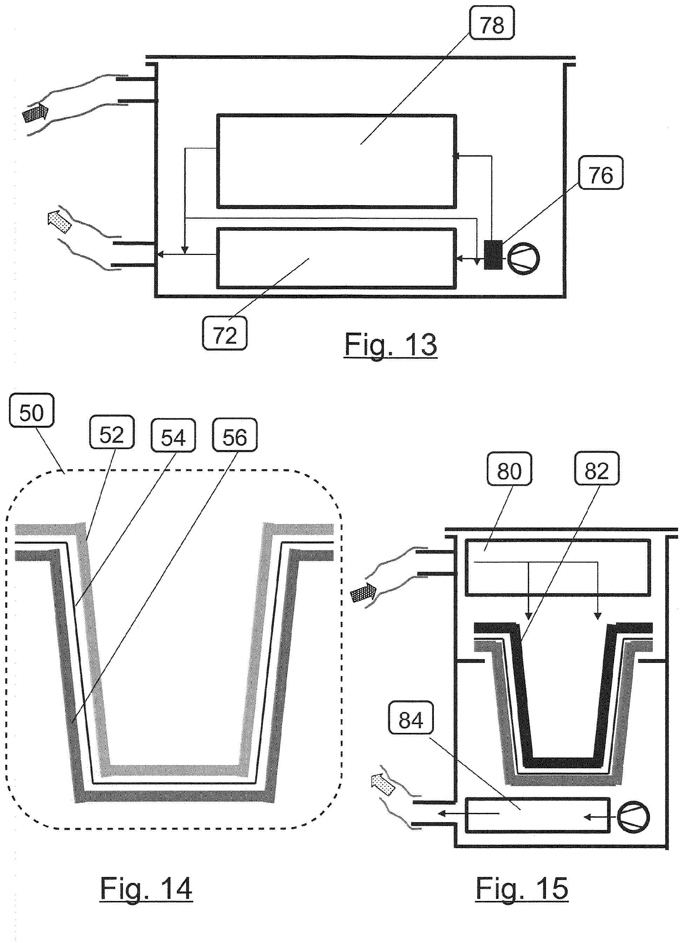

In Fig. 13 ist eine Filtereinheit 60 mit einem nachgeschalteten Schalldämpfer 72, einem Zusatzfilter 78 und einer Umschalteinheit 76 dargestellt. Das Zusatzfilter 78 dient einem Betrieb mit frischen bzw. neu eingesetzten Filterelementen 50, um von diesen nicht herausgefilterte Feinstaubanteile herausfiltern zu können. Bei frischen Tiefenfiltern ist die Abscheideleistung anfangs geringer, steigt aber nach einiger Betriebszeit deutlich an. Das Zusatzfilter 78 dient erfindungsgemäß daher insbesondere zur Überbrückung einer kurzzeitig geringeren Abscheidung während einer solchen Einfahrphase. Die Umschalteinheit 76 leitet ein Gas am Ausgang des Lüfters in Richtung Schalldämpfer 72 oder Zusatzfilter 78. Dabei kann die Verschaltung von Zusatzfilter 78 und Schalldämpfer 72 sowohl parallel, wie in Fig. 13 dargestellt, als auch in Reihe geschaltet erfolgen.

Fig. 14 zeigt ein Ausführungsbeispiel eines mehrschichtigen Feinstaubfilters 50 mit einem Vorfilter 52, einer Trennschicht 54 und einem Feinfilter 56. Die Trennschicht 54 verhindert ein "Verkleben" der beiden angrenzenden Filterschichten und ist beispielsweise als grobfaserige Matte ausgeführt. Entsprechend dieser Variante der Reihenschaltung sind das Vorfiltermaterial 52 und das Feinfiltermaterial 56 in einem Filterelement 50 verbaut. Der Vorteil dieser Ausführung besteht in der kompakteren Bauweise, die insbesondere zu kleineren Gehäusen der Filtereinheit führt. Bei dieser Bauart der Filterelemente ist eine Trennschicht 54 zwischen dem Vorfilter 52 und dem Feinfilter 56 erforderlich, da es anderenfalls zu Verklebungen und Verblockungen durch die abgeschiedene Verschmutzungsfracht an der Grenzschicht von Vorfilter 52 und Feinfilter 56 kommen kann. Insbesondere die dem Vorfilter 52 zugewandte Anströmseite des Feinfilters 56 neigt zu diesen Verklebungen und Verblockungen. Diese Trennschicht kann aus einem im Vergleich zu den beiden angrenzenden Filtermaterialien grobporigen Material bestehen. Dies kann beispielsweise ein Grobfiltermaterial der Filterklassen G3 oder G4 sein. Eine weitere, nicht dargestellte Alternative ist eine metallische Ausführung aus mindestens zwei Schichten von Maschendraht, die einen weiteren Abstandshalter, wie beispielsweise eine Struktur aus Draht mit einem im Vergleich zum äußeren Maschendraht dickeren Durchmesser, zwischen sich aufweisen können. Diese metallische Abstandshaltervariante kann, bei geeigneter Ausführung, auch eine stützende Funktion übernehmen und so insbesondere zusätzliche Formgebungselemente 58 ersetzen.

Fig. 15 zeigt eine integrierte Filtereinheit, beispielsweise für Kohlefeuerungen, mit einer zusätzlichen Vorrichtung zur Entschwefelung. Beispielsweise bei Restaurants, die unter anderem Fleisch über Holzkohle grillen, kommt es, vor allem in Ballungsgebieten, verstärkt zu Nachbarschaftsbeschwerden wegen der Geruchsemissionen. Für diese Anwendungen kommt eine Geruchsminderung bzw. Geruchsabscheidung in Betracht.

Diese Abscheidefunktionalitäten, die über die Abscheidung von Feinstaub und Kondensat hinausgehen, können sowohl in integrierter Ausführungen, beispielsweise wie in Fig. 15 Pos 80 dem Filter vorgeschaltet, Pos. 82 im Bereich des Filters integriert oder dem Filter nachgeschaltet ausgeführt werden. Diese integrierte Ausführung steht im Gegensatz zu der separaten in Fig. 30 Pos. 27 dargestellten separaten Ausführung.

Sowohl die vorgenannten integrierte als auch die separate Ausführung kann zur Abscheidung von Gerüchen, PAK, BaP, PCDD/F etc., beispielsweise mit Aktivkohle, Herdofenkoks (HOK) oder Zeolithen bzw. beispielsweise mit Kalk zur Abscheidung saurer Gasbestandteile wie SO2 zur Entschwefelung eingesetzt werden.

Gemäß einer ersten Variante ist eine dem Feinstaubfilter vorgeschaltete Entschwefelungs-/ Geruchsminderungs-/ PAK-Abscheidungsvorrichtung 80 vorgesehen, beispielsweise ausgeführt als Festbett aus Kalk oder BICAR (Natriumhydrogencarbonat). Gemäß einer zweiten Variante ist eine in die Filtereinheit integrierte Entschwefelungs-/ Geruchsminderungs/PAK-Abscheidungsvorrichtung 82 vorgesehen, beispielsweise ausgeführt als Kalkschicht. Gemäß einer dritten Variante ist eine der Filtereinheit nachgeschaltete Entschwefelungs-/Geruchsminderungs/PAK-Abscheidungsvorrichtung 84 vorgesehen, beispielsweise ausgeführt als Festbett aus Kalk bzw. Aktivkohle. Das Festbett kann beispielsweise aus Calciumhydroxid (gelöschtem Kalk, $Ca(OH)_2$ oder BICAR) sein, wenn das Rauchgas entschwefelt werden soll und aus Aktivkohle, Herdofenkoks (HOK) etc., wenn Gerüche und/oder PAK, BaP, PCDD/F abgeschieden werden sollen.

Alternativ kann eine separate Geruchsabscheidungseinheit 82 auch als beispielsweise in Form von Kassetten oder Patronen ausgeführte Aktivkohleschicht mit optional vorgeschaltetem Drahtgestrickfilter als Fettfang und optional dem vorgeschalteten Wirbelstromfilter als Brandschutz ausgeführt sein.

In Kleinkohlefeuerungen wird überwiegend Braunkohle eingesetzt, deren Schwefelgehalt bspw. als Mittelwert von rheinischer und Lausitzer Braunkohle abgeschätzt werden kann. Bei einem jährlichen Durchsatz von zwei Tonnen Braunkohle und einem emissionsrelevanten Anteil von 0,225 % entspricht dies Emissionen von 4,5 kg/a reinem Schwefel bzw. 9 kg $SO_2$. Zur Abscheidung von einem Molekül $SO_2$ wird ein Molekül $Ca(OH)_2$ benötigt, aus welchem sich letztlich Gips ($CaSO_4$) bildet. Aufgrund der molaren Massen von $SO_2$ mit 64 g/mol und $Ca(OH)_2$ von 74 g/mol ergibt sich ein jährlicher Bedarf von 10,5 kg $Ca(OH)2$ pro Jahr. Da diese Abschätzung zunächst auf der Annahme idealer Reaktionsbedingungen, d.h. einem Stöchiometriefaktor von 1,0 ausgeht, wird der reale Bedarf mit 10 bis 40 kg $Ca(OH)_2$ und im Mittel mit 25 kg $Ca(OH)_2$ pro Jahr abgeschätzt. Diese Menge an $Ca(OH)_2$ kann sowohl in Festbetten vor und nach dem Filtermaterial in den Rauchgasstrom eingebracht werden. Ferner ist denkbar, dies als Schicht anströmseitig auf dem Filtermaterial zur Staubabscheidung, zwischen den Filtermaterialien zur Vor- und Feinreinigung oder abströmseitig nach dem Filtermaterial zur Feinreinigung des Staubes einzusetzen. Bei einer Schüttdichte von etwa 400 kg/m³ für $Ca(OH)_2$ ergibt sich unter der Annahme einer Filterfläche zur Staubabscheidung von 5 m² eine Schichtdicke von 1,25 cm Stärke. Diese Schichtdicke liegt in der Größenordnung von den Tiefenfiltermaterialien zur Vor- und Feinabscheidung.

Bevorzugt findet die Entschwefelung mit $Ca(OH)_2$ im Temperaturbereich um 140 °C, bei BICAR im Temperaturbereich um 180°C statt. Diese höheren Temperaturen liegen eher im Bereich des Rohgaseintritts 66 des Filters 60 vor. Gleichzeitig soll die $Ca(OH)_2$ Schicht vor einem zu hohen Staubeintritt geschützt werden, der anderenfalls den Druckverlust während der Durchströmung erhöhen würde. Die am meisten bevorzugte Stelle des Einsatzes der $Ca(OH)_2$-Schicht ist daher abströmseitig als Zusatzschicht auf den Filterelementen 50 nach der Feinabscheidung des Staubes. Bevorzugt kann die Entschwefelungsschicht zwischen den Filtermaterialien für Vor- und Feinabscheidung des Staubes installiert werden. Denkbar ist auch eine Installation als Festbett vor den Filterelementen im Rohgasbereich des Filtergehäuses (80) oder aber als Festbett nach den Filterelementen im Reingasbereich des Filtergehäuses (84).

Anstelle von Kalk oder BICAR, der für die Entschwefelung in den Gasreinigungseinheiten 80, 82, 84 eingesetzt wird, können die Gasreinigungseinheiten 80, 82, 84 auch mit geruchsmindernden Stoffen wie beispielsweise Aktivkohle, Herdofenkoks etc. ausgerüstet werden, die ebenfalls PAK, BaP und PCDD/F abscheiden.

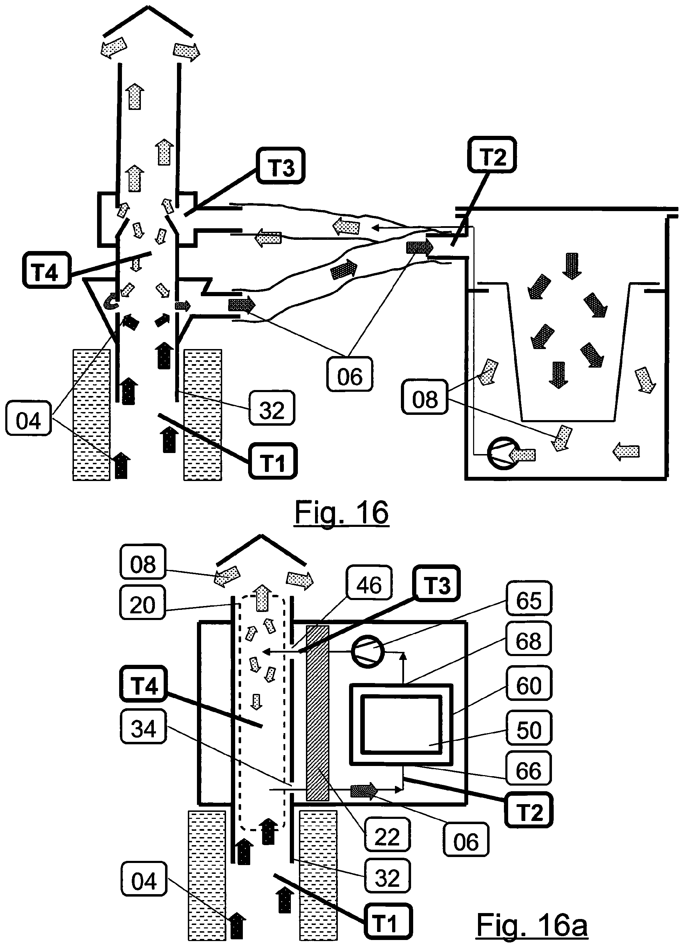

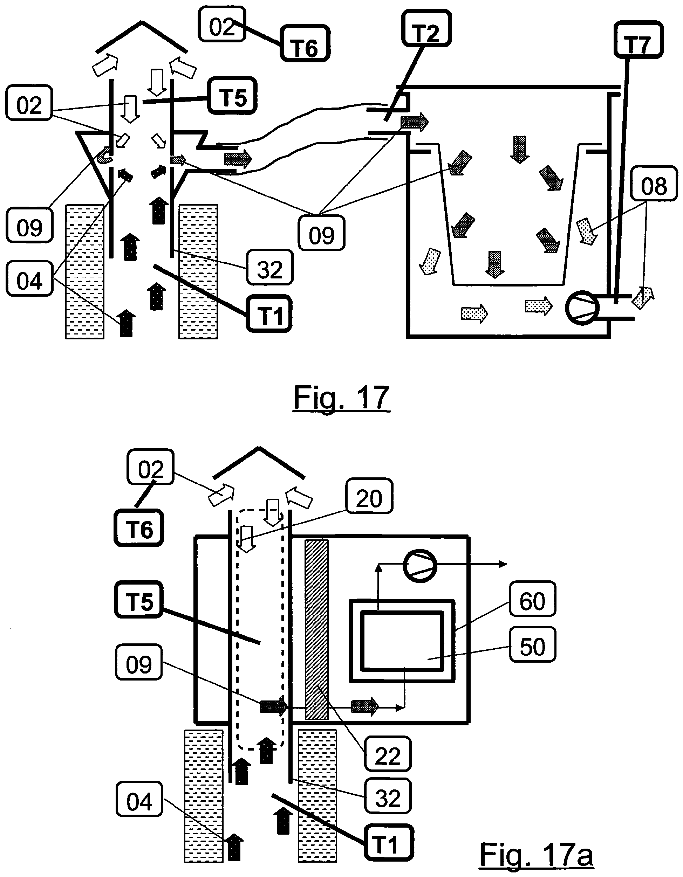

Durch den im Folgenden mit Bezug zu den Fig. 16, 16a, 17 und 17a beschriebenen Temperaturvergleich von Rohgas T1, Umgebung T6, rezirkuliertem Reingas T3 und einer Stelle oberhalb der Absaugeinheit (T4 / T5) kann dies Steuerung sicher und zuverlässig sowie kostengünstig realisiert werden. Die Vorteile dieser erfindungsgemäßen Lösung bestehen in der Einfachheit, die im Laufe der Entwicklung auf immer mehr teure und störanfällige Komponenten verzichteten konnte.

Die Steuerung für die erfindungsgemäße Vorrichtung zielt vor allem auf eine Veränderung der Ventilatordrehzahl. Die Steuerung bestimmt vorzugsweise das Optimum des Betriebspunktes zwischen zwei Grenzfällen (Rauchgasdurchbruch und Kondensatanfall) ständig neu, so dass hier von einer dynamischen Steuerung die Rede ist. Die folgenden Erläuterungen sind exemplarisch und nicht einschränkend auf den Umfang der Erfindung zu versehen. Es wird eine bevorzugte Variante der Steuerung mit zwei Grenzfällen (Verhinderung bzw. Minderung von Rauchgasdurchschlag sowie Kondensatanfall) beschrieben, die in diesem Beispiel auf vier Temperaturmessstellen zurückgreift. Eine alternative Steuerung, die mit hier nur zwei Temperaturmessstellen auskommt um einen Rauchgasdurchschlag zu verhindern bzw. zu mindern wird ebenfalls erläutert. Die letztgenannte Steuerung optimiert die Ventilatordrehzahl iterativ, in dem sie, so lange kein Rauchgas durchschlägt, versucht die Drehzahl abzusenken.

Je nach Anwendungsfall sind in den verschiedenen Abbrandphasen der Öfen unterschiedliche Rauchgasmengen bei unterschiedlichen Temperaturen zu erfassen. Dazu kommt, dass auch die vorgeschalteten Kamine einen großen Einfluss, vor allem auf die Rauchgastemperatur haben: lange gemauerte Kaminzüge führen zu einer stärkeren Abkühlung des Rauchgases als kurze isolierte metallische Züge. Ebenfalls spielt das Nutzerverhalten eine große Rolle für die zu reinigende Rauchgasmenge und -qualität. Der Nutzer kann unterschiedlich viel Holz mit verschiedenen Feuchten im Ofen auflegen, wobei auch die Größe der Holzstücke einen deutlichen Einfluss auf die Feinstaubentwicklung hat. Diese Effekte sind in der Fachliteratur eingehend beschrieben worden. Wenn sich Filter im Laufe der Betriebsdauer mit abgeschiedenem Feinstaub und Teer zusetzen, muss der Ventilator dies mit einer erhöhten Drehzahl ausgleichen. Dies bedeutet, dass die Steuerung auf eine Vielzahl von ständig variierenden Parametern schauen und diese bewerten muss.

Die Sensorik zur Erfassung von Strömungsverhältnissen ist marktverfügbar und generell technisch ausgereift, jedoch vergleichsweise teuer und daher für die erfindungsgemäße Anwendung, die den Endverbraucher nur wenige Tausend Euro kosten darf, ungeeignet sind.

Es wurde festgestellt, dass diese Technologie, insbesondere bei geringer Wartung, störanfällig auf die Verschmutzungen aus Staub, Teer und Kondenswasser reagiert. Dies trifft insbesondere dann zu, wenn das Kondenswasser bspw. in Druckmessschläuchen im Winter zu Eis gefrieren kann.

Selbst vergleichsweise einfache Drucksensoren, wie sie beispielsweise von WO 2008/010242 A1 vorgeschlagen werden, kommen bei der erfindungsgemäßen Anwendung an ihre Grenzen, da die Druckunterschiede bei Rauchgassystemen mit Naturzug, d.h. ohne feuerungsseitige Rauchgasventilatoren, im Bereich von wenige Pascal liegen. Selbst aus der Luftfeuchte bei geringen Temperaturen auskondensierendes Wasser innerhalb von Schlauchleitungen von der Druckmessstelle zum Sensor kann die Messung erheblich negativ bis hin zum Ausfall beeinflussen. Technische Maßnahmen, wie beispielsweise eine Begleitheizung der Messleitungen sind aufgrund der hohen Kostenrestriktionen der Anwendung kaum realisierbar.

Es hat sich daher, im Lauf der Entwicklung, überraschend herausgestellt, dass die Strömungsmessung auf indirektem Wege mit Temperatursensoren sicher und zuverlässig erfolgen kann. Dieser unerwartete Effekt hängt auch mit der deutlichen Abkühlung des Reingases gegenüber dem Rohgas zusammen, die u.a. auf den erforderlichen großen Filterflächen und der daraus resultierenden großen Gehäuseflächen, die auch als Kühlflächen wirken, beruht. Temperatursensoren gehören zu den einfachsten, robustesten und preiswertesten Sensoren, sie sind daher für die erfindungsgemäße Anwendung ideal.

Es hat sich herausgestellt, dass das gereinigte Reingas, aufgrund des Wärmeverlustes zumindest an der Oberfläche der Filtereinheit, kühler ist als das direkt von der Feuerung kommende ungereinigte Rohgas. Keine der bekannten Feinstaubabscheidevorrichtungen hat bisher einen vergleichsweise einfachen und robusten Steuerungsansatz implementiert.

In Fig. 16 und Fig. 17 sind Ausführungsbeispiele der Funktionsweise einer Temperatursteuerung des erfindungsgemäßen Feinstaubfilters mit zwei getrennten Baugruppen für Filter- und Absaugeinheit mit und ohne Rezirkulationseinheit dargestellt. Da vorzugsweise keine Rauchgasklappen oder sonstigen Drosselorgane vorhanden sind, erfolgt die Steuerung hier ausschließlich über eine Beeinflussung der Drehzahl des Ventilators. Eine Erhöhung der Ventilatordrehzahl führt ebenso zu einer verbesserten Absaugung der Rauchgase, die von unten von der Feuerung her zur Absaugeinheit kommen, wie auch zu einer Erhöhung des Falschgasanteils, der von oben zur Absaugeinheit gelangt.

Der gestrichelt dargestellte Bypassweg 20 deutet den Bereich an, über den das ungereinigte Rauchgas am Filter vorbei abgeführt wird, wenn beispielsweise eine Betriebsstörung wie Stromausfall vorliegt. Der schraffiert dargestellte Bereich kennzeichnet den Kernbereich des Bypassweges, hier zwischen Absaug- und Rezirkulationseinheit dargestellt. Wenn in der Beschreibung von Bypassweg die Rede ist, ist die Umgehung des Filtrationsweges gemeint.

Die Figuren 16 und 17 stellen u.a. die Gasströmungen innerhalb der Vorrichtung und die Lage der Temperaturmessstellen bei der erfindungsgemäßen Vorrichtung mit zwei getrennten Baugruppen für Absaug- und Filtereinheit dar. Die Figuren 16a und 17a zeigen ebenfalls die vorgenannten Strömungen und Temperaturmessstellen am Beispiel einer erfindungsgemäßen Vorrichtung, bei der Absaug- und Filtereinheit in einer gemeinsamen Baugruppe angeordnet sind.

Das Falschgas besteht bei der in Fig. 16 bzw. 16a Ausführung mit Rezirkulationseinheit zumindest überwiegend aus rezirkuliertem gereinigtem Abgas. Bei der in Fig. 17 bzw. 17a dargestellten Ausführung ohne Rezirkulationseinheit besteht das von oben angesaugte Falschgas zumindest überwiegend aus Umgebungsluft.

Da die freien Strömungsquerschnitte oberhalb und unterhalb der Absaugstelle zumindest annähernd gleich groß sind, führt der in der Absaugstelle anliegende Unterdruck dazu, dass die Anteile der von oben bzw. von unten angesaugten Gase in etwa gleich groß sein können. Ein zu hoher Falschgasanteil sollte möglichst vermieden werden um die Filterflächenbelastung gering zu halten und die Gefahr des Kondensatanfalls durch Taupunktunterschreitung durch zu hohe Anteile von kalter Falschluft, insbesondere wenn keine Rezirkulationseinheit installiert ist, zu minimieren.

Die erforderliche Ventilatordrehzahl bzw. der erforderliche Unterdruck verändert sich während des Betriebs laufend, insbesondere da die Rauchgasmenge und - temperatur über die Abbrandphasen des Brennstoffs veränderlich ist und der Druckverlust des Filters aufgrund der Filterbeladung mit zunehmender Betriebszeit zunimmt.

Die Ventilatordrehzahl soll damit ausreichend hoch sein, um alles von der Feuerung kommende Rauchgas sicher zu erfassen. Auf der anderen Seite soll die Ventilatordrehzahl nicht zu hoch sein um ein Auskühlen durch zu hohen Falschlufteintrag möglichst gering zu halten bzw. im Idealfall auszuschließen.

Die Steuerungen der in Fig. 16/16a und 17/17a dargestellten Varianten in einer Baugruppe für Absaugteil (bzw. Absaugöffnung 34) und Filtereinheit 60 mit und ohne Rezirkulationseinheit weisen die folgenden Gemeinsamkeiten auf (die Erläuterung ist exemplarisch und nicht einschränkend im Bezug auf den Umfang der Erfindung):

• Die untere Kamintemperatur-Messstelle T1 erkennt den Beginn und das Ende des Betriebs der Feuerung und schaltet die Ventilatorsteuerung ein bzw. aus, beispielsweise bei Temperaturen von größer bzw. kleiner 40 °C. Alternativ kann das Anschalten auch über einen Temperaturgradienten erfolgen, der für das Anheizen des Ofens typisch ist. Beim Start über den Temperaturgradienten kann die Filtration bereits früher beginnen und ein Fehlstart im Sommer kann ausgeschlossen werden, wenn der Kamin durch die Sonneneinstrahlung auf über 40°C erwärmt wird. Ebenfalls ist eine Kombination aus dem o.g. Festwert in Verbindung mit einer Zeitschaltung für Sommer- und Winterbetrieb möglich (saisonal spezifischer Startwert). Ebenfalls möglich für das Startkriterium ist die Betrachtung der Temperaturmessstelle T1 in Bezug zur Umgebungstemperatur des Kaminfilters. Auch andere Messstellen für T1, wie beispielsweise direkt am Ofen, sind möglich und Bestandteil der Erfindung.

• Die Filtereintrittstemperatur-Messstelle T2 schaltet bei Überschreitung der maximal zulässigen Betriebstemperatur im Bereich der Filterelemente den Ventilator ab oder reduziert die Drehzahl, um eine thermische Schädigung des Filtermaterials zu verhindern. Die Abschaltung des Ventilators führt zu einer Ableitung der ungefilterten heißen Rauchgase an die Atmosphäre, beispielsweise bei Temperaturen von größer 160 °C an der Stelle T2. Ebenfalls möglich ist, dass die Steuerung den zeitlichen Temperaturgradienten von T2 betrachtet um, wenn dieser Wert schnell steigt bereits frühzeitig dagegen zu steuern. Auch ein Voralarmwert von beispielsweise 150°C ist hierbei möglich.

Ziel der Steuerung ist, bei jedem Betriebszustand der Feuerung (Anheizen, Vollbrand, ausklingende Glutphase) den Rauchgasstrom vollständig zu erfassen ohne zu viel kühlenden Falschgas anzusaugen um ein Ausfallen von wässrigem Kondensat zu verhindern. Wenn das wässrige Kondensat unterhalb von Rauchgastemperaturen von etwa 60°C ausfällt und die obere Betriebstemperatur das Filtermaterial beispielsweise bei 160°C liegt, dann liegt das optimale Temperaturfenster für den Filterbetrieb im Bereich etwa um 100°C. Auch bei Schwankungen der Betriebstemperatur um etwa 20 Kelvin besteht noch ausreichend Sicherheit in Hinblick auf Kondensatanfall und hohe thermische Beanspruchung des Filtermaterials.

Die Steuerung verfügt über eine Primärregelung (Grobregelung), die darauf zielt alles Rauchgas zu erfassen und den Kondensatanfall zu verhindern. Die Sekundärregelung (Feinregelung) optimiert die Betriebstemperatur innerhalb des Fensters der Primärregelung.

Eine Absenkung der Betriebstemperatur des Filtermaterials T2 durch die Sekundärregelung erfolgt, innerhalb der zulässigen Grenzen der Primärregelung, durch eine Erhöhung der Drehzahl des Ventilators um mehr kühlendes Falschgas anzusaugen. Die Sekundärregelung kann inaktiviert werden, wenn das von der Feuerung kommende Rauchgas bei T1 einen oberen Wert überschreitet (indirekt festgelegt über den im Folgenden spezifizierten Beiwert z3). Durch diese Inaktivierung der Sekundärregelung kann verhindert werden, dass das ohnehin schon heiße Rauchgas durch ein zusätzliches Anfachen der Feuerung durch zusätzlichen Unterdruck im Kamin weiter in seiner Temperatur erhöht wird.

Die Steuerung des erfindungsgemäßen Feinstaubfilters mit Rezirkulationseinheit (Fig. 16/16a) erkennt eine zu geringe Absaugung vorteilhafterweise daran, dass ein Durchbruch von wärmerem Rauchgas vorliegt, der über die Messstelle T4 bspw. im Kernstrom der Verlängerung des ursprünglichen Abgasweges gemessen wird. Bevorzugt befindet sich die Messstelle T4 im Bereich zwischen der Absaugung und der Rezirkulation des Rauchgases. Diese Temperatur wird mit der des rezirkulierten Reingases verglichen, dass im Rezirkulationsraum durch die Messstelle T3 gemessen wird. Wenn die Differenz von T4 und T3 größer als ein Schwellwert ist, erkennt die Steuerung einen Durchbruch von wärmerem Rauchgas und regelt die Ventilatordrehzahl hoch.

Bei Ausführungen ohne Rezirkulationseinheit (Fig. 17(a)) wird der Wert der oberen Temperaturmessstelle T5 mit dem Temperaturwert der Umgebung(-sluft) T6 verglichen. Wenn alles Rauchgas von der Feuerung durch das Filter gesaugt wird und von dort aus in die Atmosphäre abgegeben wird, findet am oberen Ende der Absaugeinheit nur ein Eintrag von Falschluft aus der Umgebung statt. Dies bedeutet, dass die Temperatur-

messstellen T5 und T6 (Fig. 17/17a) etwa die gleichen Werte anzeigen. Erst beim Durchbruch von warmem ungereinigtem Rauchgas stellt sich eine Differenz zwischen T5 und T6 ein. Die Steuerung reagiert vorzugsweise ab einer gewissen Toleranz für die Differenz von T5 und T6 und regelt die Ventilatordrehzahl hoch um einen weiteren Rauchgasdurchbruch zu verhindern.

Bei Ausführungen mit Rezirkulationseinheit (Fig. 16/16a) wird der Wert der oberen Temperaturmessstelle T4 mit dem Temperaturwert des rezirkulierten Reingases T3 verglichen. Die Messstelle T4 ist bevorzugt zwischen der Absaugeinheit und der Rezirkulationseinheit positioniert. Solange die Werte von T4 und T3 etwa im gleichen Bereich liegen, erkennt die Steuerung dass der Falschgaseintrag aus rezirkuliertem, aufgrund der Wärmeverluste über die Wandungen der Verbindungelemente und der Filtereinheit abgekühlten, Reingas besteht. Wenn T4 einen deutlich höheren Wert als T3 anzeigt, deutet dies auf einen Durchschlag von wärmerem ungereinigtem Rauchgas von der Feuerung her hin. In diesem Fall soll die Ventilatordrehzahl erhöht werden. Die Steuerung aufgrund des Abgleichs der Temperaturstellen T3 und T4 bei Ausführungen mit Rezirkulation erfolgt daher analog zum Abgleich der Temperaturmessstellen T5 und T6 bei Ausführungen ohne Rezirkulation.

Alternativ, jedoch nicht bevorzugt ist auch eine Variante der Steuerung bei Ausführung mit Rezirkulation möglich, die eine verminderte Anzahl an Messstellen hat und bis auf T3 und T4 reduziert werden kann. Bei dieser Variante optimiert die Steuerung nicht zwischen zwei Grenzen, sondern weicht vorzugsweise immer probehalber von der einen Grenze (Verhinderung von Rauchgasdurchbruch) ab, um so an das Optimum heran zu gelangen. Wenn T4 größer wird als T3 bricht warmes Rauchgas durch, so dass die Ventilatordrehzahl erhöht werden muss. Wenn T3 und T4 etwa den gleichen Wert zeigen, kann die Steuerung versuchen die Drehzahl so weit zu verringern, bis sich ein geringer Anstieg von T4 gegenüber T3 andeutet. Analog hierzu soll bei der vereinfachten, jedoch nicht bevorzugten Variante, der Steuerung für die Ausführung ohne Rezirkulation der Wert von T5 durch die Umgebungstemperatur T6 bestimmt werden.

Das Herrunterregeln der Ventilatordrehzahl erfolgt bei beiden Ausführungen, mit und ohne Rezirkulationseinheit, immer dann, wenn ein zu hoher Falschgasanteil im angesaugten Rauchgas vor dem ersten Filterkontakt, an der Messstelle T2 in Fig. 16/16a bzw. 17/17a festgestellt wird.

Wenn im Idealfall alles von der Feuerung kommende Rauchgas in Richtung Filter abgesaugt wird und kein kühleres Falschgas mit angesaugt wird, dann ist die Differenz zwischen den Temperaturwerten von T1 und T2 minimal und nur bestimmt durch geringe Gehäusetemperaturverluste. Wenn die Differenz zwischen T1 und T2 steigt, ist die Ursache eine erhöhte Ansaugung von kühlerem Falschgas. Steigt die Differenz von T1 und T2 über einen vorgegebenen Toleranzwert, regelt die Steuerung die Ventilatordrehzahl herunter.

Der optimale Betriebspunkt für die Vorrichtung ergibt sich bei unterschiedlichen Rauchgasmengen, Rauchgastemperaturen und Filterbeladungen aus dem dynamischen Gleichgewicht der Steuersignale für Herauf- und Herabregeln der Drehzahlen. Die Steuerung kann bevorzugt auf große Abweichungen vom angestrebten Betriebspunkt mit größeren Anpassungen der Ventilator reagieren.

Um ein zu häufiges Regeln zu unterbinden, kann die Steuerung gedämpft werden, d.h. erst findet erst eine Regelung statt, wenn das Signal dazu über eine gewisse Zeitspanne konstant vorliegt.

Alle Temperaturwerte, die die Steuerung aktivieren können sowohl als Festwert für eine Aktion in der Steuerung hinterlegt sein, als Vor-Alarmwert für eine mildere Voraktion oder als zeitlicher Gradient einer Temperaturänderung, die bspw. Eine Überschreitung einer maximal zulässigen Temperatur bereits früher erkennt und die Steuerung hierdurch früher und wirkungsvoller entgegensteuern kann.

Im Folgenden wir ein Beispiel für die Steuerung einer erfindungsgemäßen Vorrichtung ohne Rezirkulation (analog zu Fig. 17/17a) beispielhaft und nicht einschränkend auf den Umfang der Erfindung, der auch die hier nicht im Detail dargestellten Varianten umfasst, gegeben:

Für die Steuerung werden die folgenden Parameter definiert:

Z1 Schwellwert für Toleranz gegenüber Rauchgasdurchbruch, relevant für Primär-Regelung: Erfassung von allem Rauchgas

Z2 Schwellwert für Toleranz gegenüber Falschgaseintrag, relevant für PrimärRegelung: Verhinderung bzw. Minimierung von Kondensatausfall

Z3 Schwellwert für Obergrenze der optimalen Filtertemperatur, relevant für Sekundär-Regelung: angestrebt werden Betriebstemperaturen des Filters a) sicher oberhalb des Kondensatanfalls und b) deutlich unterhalb der maximalen Betriebstemperaturen des Filtermaterials zur Materialschonung

T1 Temperatur Rauchgas von der Feuerung, idealerweise unterhalb der Absaugung/Absaugöffnungen 34

T2 Temperatur gemischtes Rauchgas vor Filterkontakt, bspw. am Filtereintritt

T5 Temperatur im oberen Teil der Absaugeinheit, über Absaugung/Absaugöffnungen 34

T6 Umgebungstemperatur

d1 Anteil Änderung der Ventilatordrehzahl wegen möglichem Rauchgasdurchschlag, potenzielle Drehzahlerhöhung

d2 Anteil Änderung der Ventilatordrehzahl wegen möglichem zu hohen Falschluftanteil, potenzieller Drehzahlverringerung

d3 Anteil Änderung der Ventilatordrehzahl wegen möglicher zusätzlicher Kühlung zur Optimierung der Betriebstemperatur, potenzielle Drehzahlerhöhung, bevorzugt inaktiv bei sehr hohen Rauchgastemperaturen (T1 im Bereich T2max, d.h. wenn die Rauchgastemperatur von der Feuerung T1 ähnlich hoch oder sogar höher ist als die maximal zulässige Rauchgastemperatur vor den Filtermedien T2)

d aus d1, d2 und d3 resultierende Ventilatordrehzahl, bspw. D=0...100, Wert bei Neustart 80

Die Steuerung ist in eine Primär- und eine Sekundärregelung unterteilt. Die Primärregelung stellt die Hauptziel des Betriebs sicher: Erfassung von allem Rauchgas und Vermeidung von Kondensat. Die Sekundärregelung optimiert die Betriebstemperatur des Filters, sofern die Primärregelung keine Steuerung ausführt. Der Code der Steuerroutine während des Betriebs ist im Folgenden in vereinfachter Form dargestellt:

Primär-Regelung: kein Rauchgasdurchschlag und möglichst geringer Falschgasanteil

Beginn Primärregelung

Ventilator Hochregeln wegen Rauchgasdurchschlag

    d1=0, d2=0, d3=0, d=0
    if (T5 - T6) > Z1 then d1=5
    if (T5 - T6) > Z1+10 then d1=10
    if (T5 - T6) > Z1+30 then d1 =20

Ventilator Herunterregeln wegen Falschgaseintrag

    if (T1 - T2) > Z2 then d2=-5
    if (T1 - T2) > Z2+10 then d2=-10
    if (T1 - T2) > Z2+30 then d2=-20

Sekundärregelung: Optimierung der Filtertemperatur T1, beispielsweise auf einen Bereich um 100°C, oberhalb von etwa 150°C wird die Sekundärregelung inaktiviert um ein weiteres Anfachen der Feuerung zur zusätzlichen Unterdruck im Kamin infolge von einer Erhöhung der Ventilatordrehzahl zu verhindern

    if T2 > z3 then d3=5
    if T2 > Z3+20 then d3=20

Ausführung der resultierenden Ventilatordrehzahl:

Abfrage Gültigkeitsbereich von Ventilatordrehzahl

$$d = d1 + d2 + d3$$

if d ≥0% AND d≤100% then Umsetzung d als Ventilatordrehzahl else d=0% bzw. d=100%

GOTO Beginn Primärregelung

In beiden Varianten - mit und ohne Rezirkulationseinheit - stellt sich die Ventilatordrehzahl vorteilhafterweise als dynamisches Gleichgewicht zwischen den vorgenannten Randbedingungen "Verhinderung von Rauchgasdurchbruch" und "Verhinderung von Taupunktunterschreitung" ein. Dieses dynamische Gleichgewicht passt sich vorteilhafterweise den über die Abbrandphasen der Feuerung veränderlichen Rauchgasmengen und -temperaturen ebenso an wie an wie an den mit der Zeit zunehmenden Differenzdruck über das Filtermedium.

Ein vollständig beladenes Filtermedium wird von der Steuerung dadurch erkannt, dass bei maximaler Drehzahl des Ventilators nicht alles Rauchgas erfasst wird. Bereits im Vorfeld kann die zunehmende Filterbeladung vorteilhafterweise über steigende Drehzahlen während der Abbrandphase erkannt werden. Diese Daten können von der Steuerung dem Betreiber oder Schornsteinfeger etc., etwa aufs Mobiltelefon, gesendet werden, so dass ein vorzeitiger Wartungsbedarf sicher erkannt werden kann. Auf der anderen Seite kann hierdurch beispielsweise auch erkannt werden, dass die Filterelemente eine weitere Heizperiode ohne Austausch genutzt werden können.

Neben dieser Datenübermittlung kann auch die Steuerung vorteilhafterweise fernparametriert werden, in dem veränderte Schwellwerte für das Hoch- und Runterregeln der Ventilatordrehzahl beispielsweise per Mobiltelefon an die Steuerung geschickt werden. Ebenfalls möglich ist im Zusammenhang mit der leitungslosen oder leitungsgebundenen Datenübertragung an die Steuereinheit der erfindungsgemäßen Vorrichtung eine Femwartung, Fernsteuerung sowie das Einspielen von Softwareupdates und Softwareupgrades.

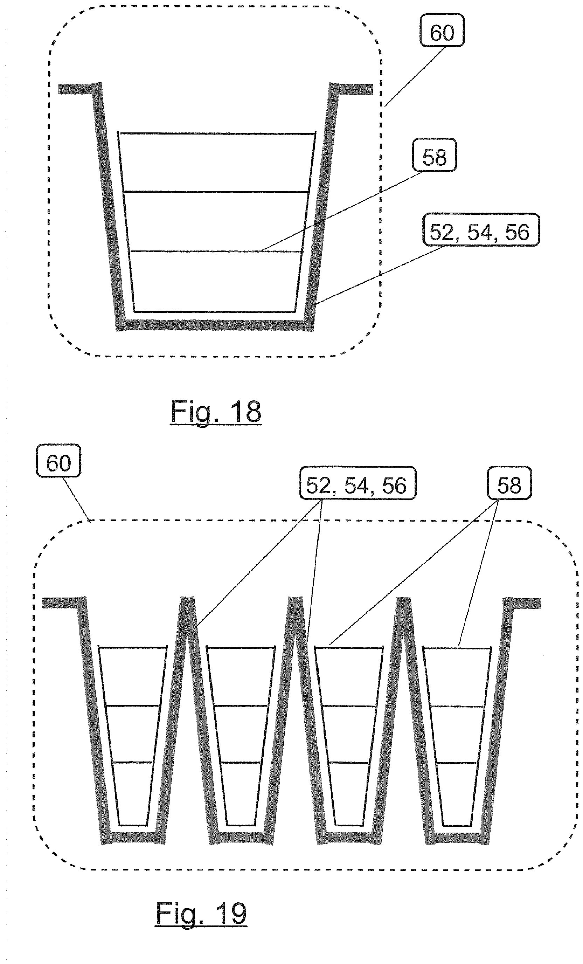

Fig. 18 zeigt ein erstes Ausführungsbeispiel eines Formgebungselements 58 im Inneren der Filtertaschen in einer Filtereinheit 60. Dargestellt ist ein Längsschnitt durch eine Filtertasche. Bei der Verwendung von Taschen-Tiefenfiltern für die Reinigung eines Abgases von Feststoff-Kleinfeuerungsanlagen ist der Volumenstrom mit weniger als 100 $m^3_N$/h im Gegensatz zum sonst üblichen Einsatz dieser Filterelemente in der Lüftungstechnik mit mehreren 1.000 $m^3_N$/h deutlich geringer. Dadurch besteht die Gefahr, dass die Filterelemente aufgrund des geringen Volumenstroms nicht durch die Gasströmung aufgestellt werden bzw. aufgestellt bleiben und zusammenfallen, so dass nicht die gesamte Filterfläche des Taschenfilters genutzt wird. Erfindungsgemäß kann dieses Zusammenfallen durch den Einsatz von festen Formgebungselementen 58 verhindert werden. Hierzu dienen beispielsweise Drahtkörper, welche im Inneren der Filterelemente bzw. -taschen 50 angeordnet werden oder - in Fig. 18 nicht dargestellte, feste Trennschichten 54, beispielsweise metallische Trennschichten 54, zwischen dem Vor- und dem Feinfilter.

Fig. 19 zeigt ein zweites Ausführungsbeispiel, welches mehrere Formgebungselemente 58 zeigt, die im inneren mehrerer Filtertaschen in einer Filtereinheit 60 angeordnet sind. Dargestellt ist ein Querschnitt durch mehrere nebeneinander befindliche Filtertaschen eines Filterelements 50, bestehend aus Vorfilter 52, optionaler Trennschicht 54 und Feinfilter 56.

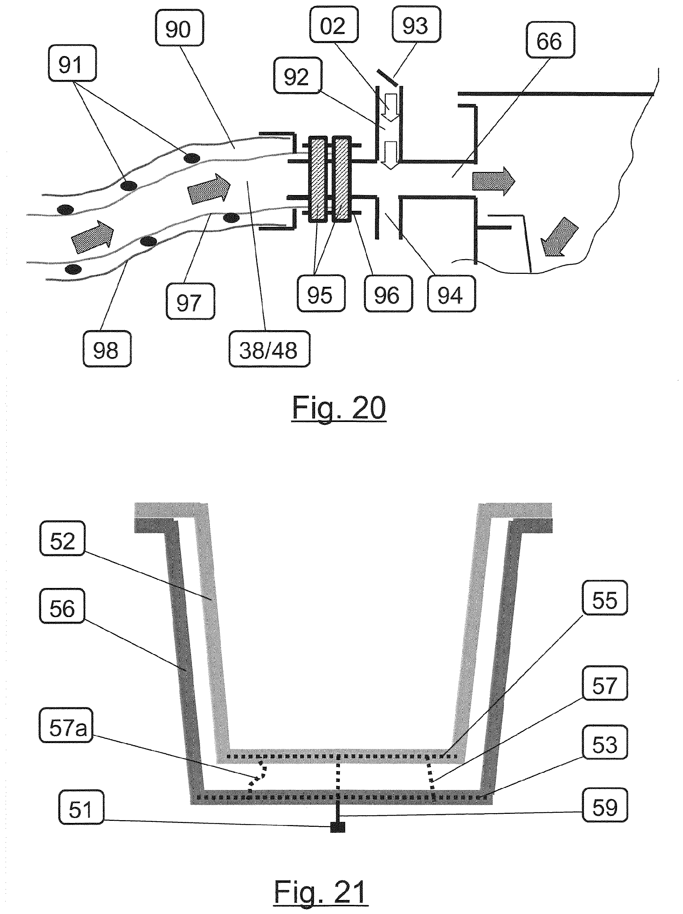

Fig. 20 zeigt ein Ausführungsbeispiel zur Erweiterung des Temperatureinsatzbereiches der erfindungsgemäßen Vorrichtung. Bei Einsatzorten mit sehr geringer Rauchgastemperatur an der Absaugstelle bestünde, auch beim Einsatz von Rezirkulationsschaltungen, mitunter die Gefahr von häufiger Taupunktunterschreitung, welche einen Einsatz der erfindungsgemäßen Vorrichtung mitunter einschränken könnte. Durch eine zusätzliche Aufheizung des Rauchgases, etwa um 10 bis 50 Kelvin, kann die erfindungsgemäße Vorrichtung vorteilhafterweise auch an solchen Standorten mit sehr geringer Rauchgastemperatur eingesetzt werden, die anderenfalls nicht möglich wären. Der Energiebedarf für die Zuheizung liegt im Bereich von wenigen hundert Watt und ist damit erheblich kleiner als die Feuerungsleistung der Kleinfeuerungsanlage, die bei Einzelraumfeuerungen meistens im Bereich zwischen 4.000 und 8.000 Watt liegt und damit um eine Größenordnung höher ist.

Ein beispielhaft als flexibler Innenschlauch 97 ausgeführtes Verbindungselement 38 und/oder 48 ist zur Minderung des Wärmeverlustes vorteilhafterweise mit einer Isolierung 90 versehen. Als Wetterschutz der Isolierung dient vorteilhafterweise ein flexibler Außenschlauch 98. Über elektrische Heizelemente 91, die auf dem Innenschlauch angebracht sind, kann eine Zusatzbeheizung erfolgen, durch die die Rauchgastemperatur innerhalb des Innenschlauchs 97 erhöht werden kann, so dass dieses Rauchgas in erwärmter Form über den Rohgasstutzen 66 in die Filtereinheit eintritt. Alternativ kann die Erwärmung des Rauchgases auch über den Stutzen 94 durch den Zustrom von Heißluft, beispielsweise aus einem Heißluftgebläse, oder den Zustrom von Heißgas, beispielsweise Verbrennungsabgas einer Gaszufeuerung oder einer Ölzufeuerung, erfolgen, wodurch das Rauchgas nachgeheizt wird.

Fig. 20 zeigt ferner eine bevorzugte und einfache Art der Befestigung des Verbindungselementes 38 bzw. 48 an der Filtereinheit. Der Innenschlauch 97 wird dazu über eine Verlängerung des Rohgaseintrittsstutzens 66 gestülpt und mittels Spannschellen 95 befestigt. Zum Schutz gegen das Einschneiden der Spannschellen wird vorteilhafterweise eine Unterlage für Spannschellen als Schlauchschutz 96 verwendet, beispielsweise ausgeführt als dünnes Metallblech in offener überlappender Ausführung, das um den Innenschlauch gewickelt ist und sich beim Anziehen der Spannschellen selbst um den Innenschlauch zuzieht. Vorteilhafterweise ist hier eine zusätzliche Dichtung, beispielhaft ausgeführt als um den Rohgasstutzen gewickelte Matte aus Hochtemperatursilikon, zwischen Rohgasstutzen 66 und Innenschlauch 97 vorgesehen (nicht bildlich dargestellt). Diese Art der Befestigung der Verbindungselemente zählt erfindungsgemäß ebenso wie beispielsweise die Kamlockkupplung zu den erfindungsgemäßen Schnellverschlusssystemen.

Ebenso ist ein Einsatz der vorliegenden Erfindung an Standorten mit sehr hohen Rauchgastemperaturen möglich, in dem das abgesaugte Rauchgas über Falschluft 02 so stark gekühlt wird, dass die maximale Betriebstemperatur der Filterelemente eingehalten werden kann.

Dies kann beispielsweise der Fall sein, wenn der Absaugpunkt nahe der Feuerung liegt und isolierte Rauchgasrohre eingesetzt werden, wie bei der nachträglichen Montage von isolierten Edelstahlkaminrohren an der Außenseite von Gebäuden, insbesondere dann, wenn das Filter in Höhe der Erdgleiche, beispielsweise im Garten, gemäß Fig. 4 eingebunden wird.

Der Falschlufteintrag erfolgt vorteilhafterweise über den Stutzen 92 und kann über ein Regelorgan 93 für Falschluft geregelt werden. Der erfindungsgemäße Anspruch von drosselfreien Rauchgaswegen trifft nach wie vor zu, da dieses Drosselorgan lediglich die Falschluftzufuhr regelt und nicht den Rauchgasstrom von der Feuerung. Aufgrund einer Störung des Regelorgans 93 kann vorteilhafterweise kein gefährlicher Rückstau von Rauchgas erfolgen. Alternativ zur Falschluftkühlung kann, beispielsweise über den Stutzen 92 auch eine Verdampfungskühlung oder eine andere Art der Kühlung implementiert werden.

Fig. 21 zeigt ein Filterelement im Längsschnitt, welches durch mechanische Bewegung, beispielsweise über eine Abreinigungsstange 51, abgereinigt werden kann. Eine Bewegung der Stange 51 wird über Verbindungselemente 59 auf eine im Boden des unteren Feinfilters 56 befindliche Längsstange 53 übertragen, welche wiederum über weitere feste oder flexible Verbindungselemente 57, 57a die Bewegung an den Boden des Grobfilters 52 überträgt. Der an der anströmseitigen inneren Oberfläche abgeschiedene Staub fällt zu großen Anteilen nach unten und reduziert somit den Druckverlust bei der Durchströmung des Filtermaterials und erhöht damit vorteilhafterweise die Standzeit des Filterelements.

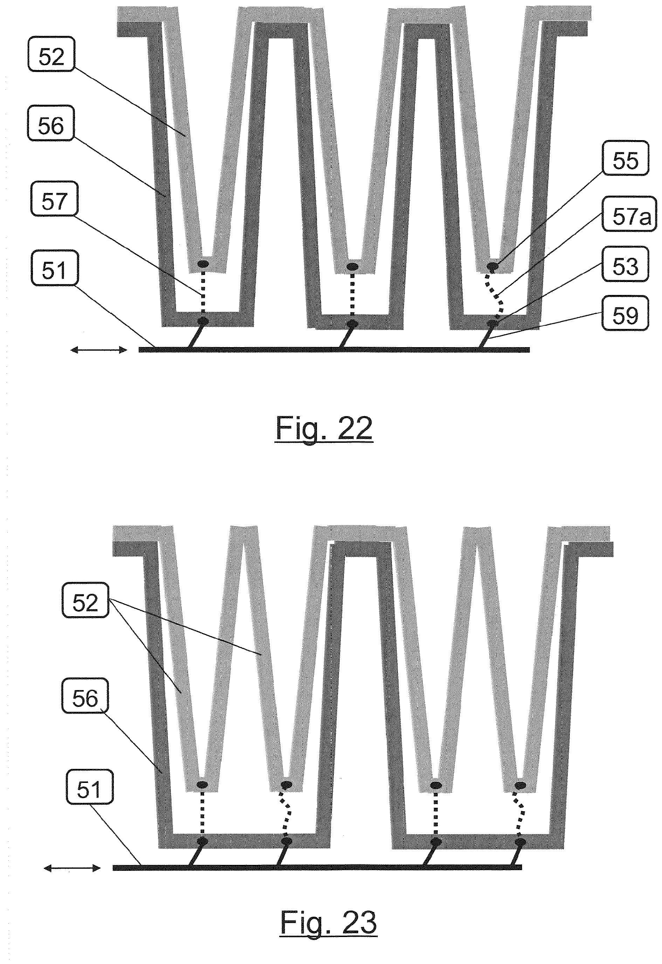

Fig. 22 zeigt einen im Vergleich zu Fig. 21 um 90° gedrehten Querschnitt durch ein Filterelement (hier sind beispielhaft drei Filtertaschen dargestellt).

Fig. 23 zeigt ein Filterelement in einer Darstellung ähnlich Fig. 22, jedoch mit einer unterschiedlichen Anzahl von Filtertaschen für eine Grob- und Feinabscheidung. Hier sind beispielhaft dargestellt jeweils zwei Grobfiltertaschen 52, die mit einer Feinfiltertasche 56 in Reihe geschaltet sind, dargestellt. Durch diese Art der Anordnung können vorteilhafterweise unterschiedliche Filterflächen in verschiedenen Filterklassen realisiert werden. Vorteilhafterweise sind erfindungsgemäß auch andere, hier nicht explizit dargestellte Kombinationen möglich.

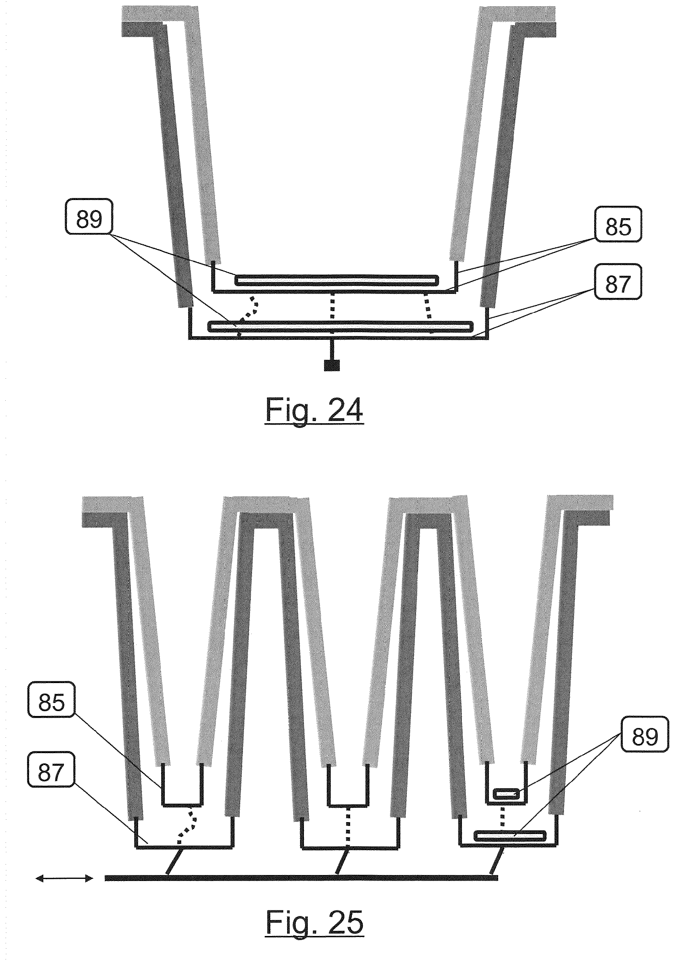

Fig. 24 zeigt einen Längsschnitt durch ein Filterelement ähnlich Fig. 21. Bei dem Filterelement nach Fig. 24 sind jedoch die Filterelemente 52, 56 im unteren Teil mit Staubfangwannen 85, 87 ausgerüstet. Erfindungsgemäß ist vorteilhafterweise vorgesehen, dass das Filterelement bzw. die Filterelemente im unteren Teil über mindestens eine Staubfangwanne (85, 87) verfügen, in der sich der abgereinigte Staub ablagert, wobei vorzugsweise im Bereich der Staubfangwannen (85, 87) elektrische Zündvorrichtungen für den abgeschiedenen Staub sowie das Kondensat vorgesehen sind. Diese Wannen 85, 87 bestehen vorzugsweise aus nicht gasdurchlässigem Material, beispielsweise aus warmfestem Stahl, wie beispielsweise 1.4828, und sie können vorteilhafterweise optional mit bspw. elektrischen Zündvorrichtungen 89 ausgestattet werden. Diese Wannen 85, 87 können alternativ vorteilhafterweise auch aus gasdurchlässigem Material, wie beispielsweise metallischem Filtermaterial, bestehen. Hier kann beispielsweise der Sonderwerkstoff Aluchrom Y Hf (1.4767) eingesetzt werden. Dieser hat den Vorteil, dass die Hitzebeständigkeit ausreicht, um den beim Abbrennen der teer- und rußhaltigen Staubfracht entstehenden Temperatur Stand zu halten. Dies bietet gleichzeitig den Vorteil, dass bei feuerungs- und kaminseitigen Betriebsstörungen wie einem Kaminbrand die dann vorherrschenden Temperaturen das Filtermaterial nicht schädigen. Alternativ kann das gesamte Filterelement aus gasdurchlässigem temperaturbeständigem Material, wie bspw. Gestrick oder Drahtgewebe bspw. Aus Aluchrom Y Hf (1.4767) oder auch Keramik(fasern), bestehen. In diesem Fall kann das gesamte Filter in situ freigebrannt werden, so dass ggf. keine zusätzliche mechanische Abreinigung mehr erforderlich sein kann.

Mit Hilfe der erfindungsgemäß vorgesehenen Zündvorrichtungen kann der nach der Regeneration der Filterelemente heruntergefallene Staub kontrolliert entzündet werden (thermische in-situ Regeneration), wodurch sich sein Volumen vorteilhafterweise deutlich verringern lässt. Eine Ableitung des heruntergefallenen Staubes über am Boden der Filterelemente befindliche Drainagen, vorteilhafterweise entsprechend zu den in der EP 0 876 190 A1 beschriebenen, wird diesbezüglich hiermit explizit als erfindungsgemäß referenziert.

Fig. 25. zeigt einen im Vergleich zu Fig. 24 um 90° gedrehten Querschnitt durch ein Filterelement mit Staubsammelkammern 85, 87 und elektrischen Zündvorrichtungen 89 (hier sind beispielhaft drei Filtertaschen dargestellt).

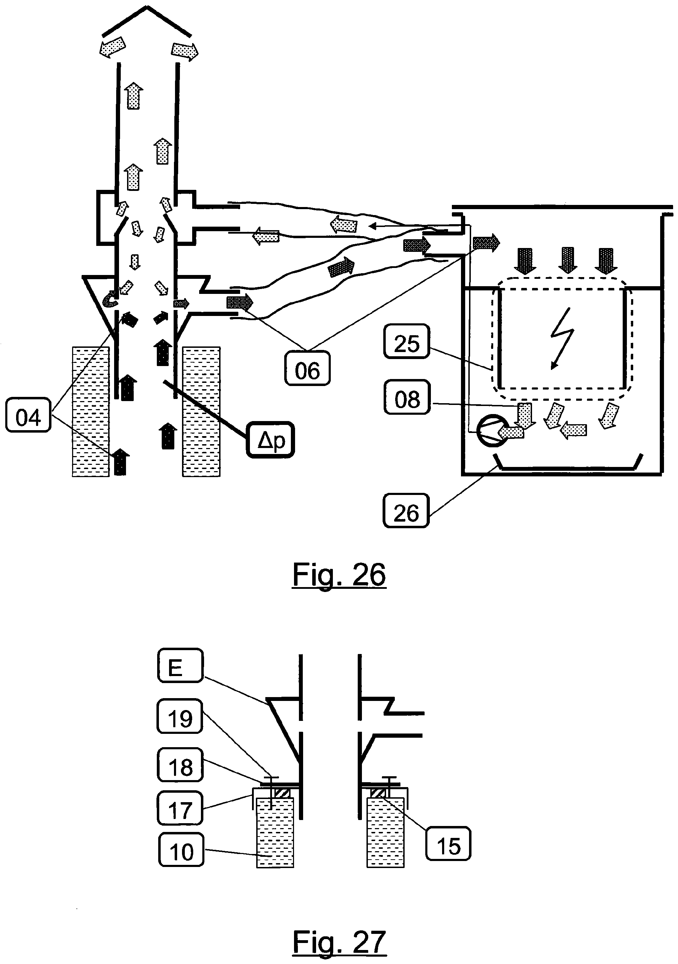

Fig. 26 zeigt beispielhaft eine Anordnung eines erfindungsgemäßen Feinstaubabscheiders, wobei ein elektrostatischer Abscheider 25, vorliegend ein E-Filter 25, zur Staubabscheidung eingesetzt wird. Vorteilhafterweise ist auch eine Kombination aus einem E-Filter und einem filterndem Abscheider erfindungsgemäß vorgesehen. Zusätzlich ist in Fig. 26, ein Auffangraum 26 für abgeschiedene und vom E-Filter 25 oder Filterelement 50 (hier ohne bildliche Darstellung) abgereinigte Verschmutzungsfracht und eine Druckmessung Δp innerhalb des Kamins dargestellt, mit der die Steuerung des Ventilators vorteilhafterweise beeinflusst werden kann. Hierdurch kann beispielsweise verhindert werden, dass der Ofen aufgrund des Ventilatorbetriebes durch einen zu hohen Unterdruck im Kamin zu viel Verbrennungsluft ansaugt und damit unbeabsichtigt mit zu hoher Leistung betrieben wird. Diese Druckmessung kann vorteilhafterweise in Kombination mit unterschiedlichen Gasreinigungsverfahren, wie Oberflächen- und/oder Tiefenfilter und/oder E-Filter eingesetzt werden.

Fig. 27 zeigt beispielhaft eine Art der Befestigung einer Absaugeinheit E an einem Kamin 10, bei der eine Halteplatte 18 fest mit dem unteren Teil der Absaugeinheit E verbunden, beispielsweise verschweißt ist. Die Befestigung 19 am Kamin erfolgt durch beispielhaft durch eine Verschraubung durch die Halteplatte in den Kamin hinein. Dargestellt ist ebenfalls eine Wetterschutzplatte 17 die beispielsweise Regenwasser so ableitet, dass es nicht auf die obere Krone des Kamins oder in dessen Inneres gelangen kann. Zur Verminderung von Leckageströmungen kann eine Dichtung 15 verwendet werden, die beispielsweise aus Mineralwolle besteht.

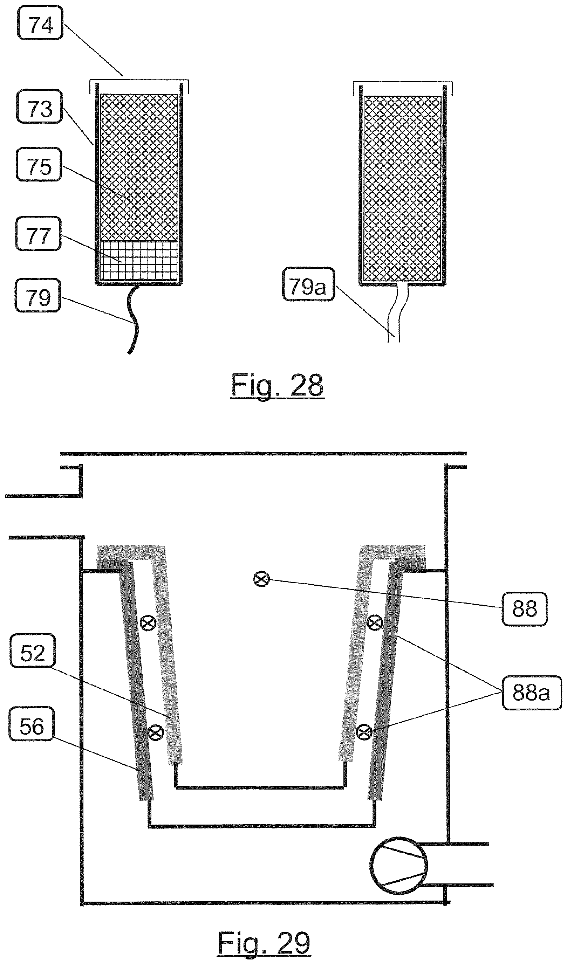

Fig. 28 zeigt beispielhaft zwei Ausführungen einer Precoateinbringung, jeweils ausgeführt in Patronenform mit einem Patronengehäuse 73, einem Deckel 74, dem Precoatmaterial 75 wie beispielsweise Kalk oder BICAR. In der linken Abbildung wird der Kalk mittels einer Treibladung 77 ausgebracht und fluidisiert. In der rechten Abbildung mittels einer externen Druckgaszufuhr, wie beispielsweise einem Druckluftschlauch.

Die Treibladung besteht beispielsweise aus einem Druckgas oder einer geringen Mengen an Explosivstoff und kann über eine Fernauslösung 79 beispielsweise elektrisch aktiviert werden. Die Treibladung führt zu einer Druckerhöhung innerhalb des Patronengehäuses, so dass der Deckel 74 abgelöst wird und das Precoatmaterial fein verteilt wird. Durch diese feine Verteilung des Precoatmaterials wird bewirkt, dass sich das Material als eine dünne Schicht auf dem Filtermaterial 52, 56 ablegt. Diese sog. "Bepuderung" kann dadurch verstärkt werden, dass der Ventilator auf möglichst hoher Stufe läuft und dadurch die Anlagerung des Precoatmaterial bevorzugt auf dem gasdurchströmtem Filtermaterial erfolgt. Hierdurch entsteht anströmseitig auf dem Filtermaterial eine trockene und leicht abzureinigende Schicht. Wenn nachfolgend die Filtermaterialien mit klebrigen Partikeln, wie beispielsweise kondensatbehaftetem Feinstaub, beaufschlagt werden, lagern sich die klebrigen Partikel auf der anströmseitigen Precoatschicht ab und haben weniger die Möglichkeit, das Filtermaterial selbst zu verkleben. Bei der Abreinigung des Filters erfolgt daher eine einfache Trennung beispielsweise der trockenen Kalkschicht mit den darauf abgeschiedenen klebrigen Partikel. Der Deckel 74 schützt das Precoatmaterial 75 während des Betriebes bis zum Einsatz der Patrone vor eindringender Feuchtigkeit und Verschmutzung.

Fig. 29 zeigt beispielhaft die Einbringung von Benetzungsmittel. Anströmseitig des Vorfilters (52) ist hier beispielhaft eine Einbringung von Benetzungsmittel 88 dargestellt. Aufgrund des relativ engen Zwischenraums zwischen dem Vorfiltermaterial 52 und dem Feinfiltermaterial 56 sind anströmseitig vom Feinfiltermaterial hier beispielhaft mehrere Einbringungen für Benetzungsmittel 88a dargestellt. Das Benetzungsmittel kann beispielsweise bevorzugt über Einaber auch über Zweistoffdüsen eingebracht werden. Vorteilhafterweise sind diese Düsen mit einem Deckel (ähnlich Pos. 74 in Fig. 28) zum Schutz gegen Verschmutzungen ausgestattet, der bei Betriebsbeginn durch das Benetzungsmittel aufgedrückt wird.

Die generelle Brandsicherheit des Kaminfilters ist aufgrund des Gehäuses gegeben, dass aus einer feuerfesten Konstruktion, bevorzugt aus Sandwichplatten aus Blech-Mineralwolle-Blech besteht. Hintergrund der Einbringung von Benetzungsmittel ist die Sicherstellung von langzeitstabilen Filtrationsergebnissen durch den Schutz der Filtermaterialien vor thermischer Schädigung durch auf den Filtermaterialien abgeschiedene verschwelende Feinstäube.

Im Fall von thermischer Reaktionen aufgrund von verschwelenden Feinstäuben bis hin zum sogenannten Rußbrand sorgt die Konstruktion des Gehäuses bzw. Filtergehäuses (62) vorteilhafterweise dafür, dass von der Erfindung keine schädlichen Auswirkungen, wie beispielsweise die Entzündung brennbarer Materialien in der näheren Umgebung, auf die Umgebung ausgehen.

Die Anforderungen bzw. Prüfverfahren für die Bestimmung der von der Erfindung ausgehenden Wärmestrahlung sind bspw. In der ÖNORM EN 16475-2 für Abgasventilatoren, speziell Abschnitt 4.4.2 Feuerwiderstand oder 5.2.2 Bild 3, beschrieben. Diese Vorschrift ist analog auf die wärmestrahlungsmindernden Gehäuse bzw. Filtergehäuse (62) anzuwenden.

Weitergehende bevorzugt einzuhaltende Eigenschaften des Gehäuses bzw. Filtergehäuses (62) ist die Rußbrandfestigkeit. Die Prüfung beinhaltet ein Aufheizen innerhalb von 10 Minuten auf 1.000 °C und das Halten dieser Temperatur für 30 Minuten. Auch hier sind die Vorschriften der ÖNORM EN 16475-2 für Abgasventilatoren, speziell Abschnitt 4.4.5 sowie 5.2.6 analog auf das Gehäuse bzw. Filtergehäuse (62) anzuwenden.

Im Wesentlichen geht es bei der Wärmestrahlungsminderung sowie der Rußbrandfestigkeit darum, dass auch beim Auftreten von Betriebsstörungen keine schädlichen Einflüsse von dem erfindungsgemäßen Kaminfilter auf beispielsweise brennbare Materialien in der näheren Umgebung ausgehen.

Beispielsweise kann eine zusätzliche thermische Isolierung unterhalb des Filtergehäuses verhindern, dass sich im Falle eines Rußbrandes die Aufstellfläche zu stark erwärmt bzw. entzündet wird. Diese thermische Isolierung kann beispielsweise aus einem keramischen Material bestehen. Ebenfalls möglich ist eine hinterlüftete Aufführung, bei der das Filtergehäuse auf temperaturresistenten Füßen (bspw. Keramik) erhöht steht und über einen belüfteten Luftspalt vom Untergrund thermisch entkoppelt ist.

Die Möglichkeit von Schwelbränden bzw. der Selbstentzündung kohlenstoffhaltiger Substanzen, insbesondere bei gleichzeitiger Anhaftung flüchtiger Substanzen, ist aus der allgemeinen Betriebspraxis beispielsweise von Aktivkohlefiltern bekannt. Da erfindungsgemäß auch kohlenstoffhaltige Stoffe mit anhaftenden flüchtigen Substanzen abgeschieden werden, können diese Effekte nicht ausgeschlossen werden - insbesondere bei einem Eintrag von Funken. Zur Abwendung dieser Gefahr kann das Funkenschutzgitter 29 verwendet werden.

Um die Oberfläche des abgeschiedenen Feinstaubs möglichst reaktionsträge zu machen, sollte diese möglichst kompakt sein. Besonders nach der Abreinigung der Filterelemente liegt der abgeschiedene Feinstaub in einer lockeren Form vor.

Es hat sich überraschend herausgestellt, dass durch die gezielte Einbringung eines Benetzungsmittels, wie beispielsweise einfach versprühtes Wasser bereits in geringen Mengen die abgereinigte Verschmutzungsfracht, die im erfindungsgemäßen Falls aus einer Mischung von inertem Feinstaub überwiegend mineralischen Ursprungs, reaktivem unverbranntem Kohlenstoff und reaktivem Teerkondensat besteht, so zuverlässig - vor allem an der benetzten Oberfläche - geglättet und kompaktiert wird, dass hierbei in der der Erfindung zu Grunde liegenden Entwicklungszeit der Vorrichtung Schwelbrände verhindert werden konnten. Ebenfalls überraschend hat sich herausgestellt, dass durch die Zugabe dieser, im Vergleich zur während des Betriebs geringen anfallenden Menge an Kondenswasser, großen Wassermenge, das Filtrationsergebnis und vor allem den Druckverlust nicht negativ beeinträchtigt. Auch konnte keine Beeinträchtigung der nachfolgenden Abreinigungszyklen beobachtet werden, wie dies nach allgemein gängiger Theorie durch eine Einlagerung von Schlamm etc. in der Tiefe des Filtermaterials zu erwarten gewesen wäre.

Dem Wasser kann sinnvollerweise ein Frostschutzmittel zugegeben werden. Da sich dieser Abreinigungsvorgang vor allem auf den an der Anströmseite des Filtermaterials bezieht, ist eine anströmseitige Einbringung des Benetzungsmittels zu bevorzugen.

Als eine weitere optionale Gegenmaßnahme gegen Schwelbrände kann eine inertisierende Atmosphäre, beispielsweise aus Stickstoff oder Kohlendioxid, gezielt in das Filtergehäuse eingebracht werden.

Fig. 30 zeigt beispielhaft eine separate Abscheidevorrichtung (27), die zur Abscheidung von Gerüchen, PAK, BaP, PCDD/F und der Gleichen vorteilhafterweise mit Aktivkohle, Herdofenkoks oder Zeolithen sowie zur Abscheidung von sauren Gasbestandteilen wie SO2 beispielsweise mit Kalk oder BICAR ausgerüstet sein kann.

In Fig. 31 ist beispielhaft eine erfindungsgemäße Vorrichtung mit einer Baugruppe für Absaug- und Filtereinheit, hier beispielhaft als Auf-Dach-Montage dargestellt, bei der hier beispielhaft ein F-Filter als Filterelement 50, hier vorzugsweise ohne Ventilator, eingesetzt wird, das die abgeschiedene Verschmutzungsfracht und auch anfallendes Kondensat in einen dafür vorgesehenen Auffangraum 26 überleiten kann. Der Auffangraum 26 verfügt optional über einen Austrag für die abgeschiedene Verschmutzungsfracht (28) sowie das Kondensat, insbesondere wässriges Kondensat (28a) das/die bevorzugt über eine Schlauchleitung beispielsweise nach unten, beispielsweise in hierfür vorgesehene Sammelbehälter auf Höhe der Erdgleichen, abgeführt werden können. Diese Ausführung verfügt über eine thermische Trennung 22 zwischen dem Bypassweg 20 und der Filtereinheit 60.

Eine alternative Ausführung des Feinstaubabscheiders mit Tiefenfilter anstelle des E-Filters, auch mit Ventilator, ist auch ohne bildliche Darstellung Bestandteil der Erfindung.

Die in den Figuren der Zeichnung dargestellten Ausführungsbeispiele und die im Zusammenhang mit diesen erläuterten Ausführungsbeispiele dienen lediglich einer Erläuterung der Erfindung und sind für die nicht beschränkend.

Bezugszeichenliste:

| | |
|---|---|
| 2 | Umgebungsluft/Falschluft (Feinstaubgehalt z.B. 0 mg/m$^3_N$) |
| 4 | Rohgas (Feinstaubgehalt z.B. 100 mg/m$^3_N$) |
| 6 | Rohgas verdünnt mit rezirkuliertem Reingas (Feinstaubgehalt z.B. 85 mg/m$^3_N$) |
| 7 | Rauchgas durch Vorfilter gereinigt (Feinstaubgehalt z.B. 50 mg/m$^3_N$) |
| 8 | Reingas (Feinstaubgehalt z.B. 10 mg/m3N) |
| 9 | Rohgas verdünnt mit Falschluft (Feinstaubgehalt z.B. 80 mg/m$^3_N$) |
| 10 | Rauchgasweg, beispielsweise Kamin |
| 12 | Abgasrohr |
| 14 | Wetterschutz und Isolierung |
| 15 | Dichtung, beispielsweise Mineralwolle |
| 16 | Regenschutz |
| 17 | Wetterschutzplatte |
| 18 | Halteplatte |
| 19 | Befestigung am Kamin |
| 20 | Bypassweg |
| 21 | Bypassweg, Kernbereich |
| 22 | Thermische Trennung |
| 24 | Rauchgasklappe innerhalb der Vorrichtung, bei nicht drosselfreier Ausführung |

| | |
|---|---|
| 25 | elektrostatischer Abscheider/E-Filter |
| 26 | Auffangraum für abgeschiedene Verschmutzungsfracht |
| 27 | Separater Abscheider sowohl für Gerüche PAK, BaP, PCDD/F und der Gleichen, beispielsweise mit Aktivkohle und optional vorgeschaltetem Fettfang (Drahtgestrickfilter) und optional vorgeschaltetem Brandschutz (Wirbelstromfilter) als auch für saure Gasbestandteile wie SO2 - im letztgenannten Fall vorteilhafterweise mit Kalk oder BICAR ausgerüstet; |
| 28 | Austrag für abgeschiedene Verschmutzungsfracht |
| 28a | Austrag für Kondensat |
| 29 | Niederschlaggitter/Funkenschutzgitter |
| 30 | Absaugeinheit |
| 32 | Anschluss an das Abgassystem, hier exemplarisch dargestellt mit Anschlussrohr |
| 34 | Absaugöffnung(en) |
| 36 | Absaugraum |
| 37 | Austrittsrohr |
| 38 | Verbindungseinheit/Verbindungsmittel von Absaugeinheit zur Filtereinheit |
| 40 | Rezirkulationseinheit |
| 44 | Rezirkulationsraum |
| 46 | Rezirkulationsöffnung(en) |
| 47 | Rezirkulationsanschluss |
| 48 | Verbindungseinheit/Verbindungsmittel von Filtereinheit zur Rezirkulationseinheit |
| 49 | Leitblech(e) |
| 50 | Filterelement |
| 51 | Stange/Abreinigungsstange |
| 52 | Vorfilter/Grobfilter |
| 53 | Stange/Längsstange am/im Boden des Feinfilters |
| 54 | Trennschicht |
| 55 | Stange/Längsstange am/im Boden des Vorfilters |
| 56 | Feinfilter |
| 57 | Verbindungselement (fest)/feste Verbindung zwischen 53 und 55 |
| 57a | Verbindungselement (flexibel)/flexible bzw. lose Verbindung zwischen 53 und 55 |
| 58 | Formgebungselement |
| 59 | Verbindungselement/Verbindung zwischen 53 und 51 |
| 60 | Filtereinheit |
| 61 | Feuchtesensor |
| 62 | Filtergehäuse |
| 63 | Bodenmatte zur Aufnahme und Verdunstung von Kondensat, beispielsweise aus Mineralwolle |
| 63a | Drainageanschluss |
| 64 | Wartungsdeckel |
| 65 | Lüfter |
| 66 | Rohgaseintritt |
| 67 | Seitenkammer |
| 68 | Reingasaustritt |

| 69 | Aufnahme für Filterelement |
| 70 | Trennwände für Reihenschaltung von Filterelementen |
| 71 | Precoateinbringung, anströmseitig vom Filtermaterial, bevorzugt im Batchverfahren, beispielsweise über mindestens ein Patrone |
| 72 | Schalldämpfer |
| 73 | Gehäuse Precoatpatrone |
| 74 | Deckel Precoatpatrone |
| 75 | Precoatmaterial, beispielsweise Kalk |
| 76 | Umschalteinheit zwischen Schalldämpfer und Zusatzfilter |
| 77 | Treibladung für Precoatmaterial, beispielsweise Druckgas, Explosivladung oder dergleichen |
| 78 | Zusatzfilter |
| 79 | Fernauslösung Treibladung, beispielsweise elektrisch |
| 79a | Anschluss für externe Druckgaszuführung, beispielsweise Druckluftschlauch |
| 80 | zusätzliche integrierte Gasreinigungseinheiten, den Feinstaubfilterelementen vorgeschaltet, zur Entschwefelung beispielsweise mit Kalk bzw. zur Geruchsminderung sowie zur Abscheidung von PAK, BaP, PCDD/F beispielsweise mit Aktivkohle, HOK etc. bestückt (integrierte Ausführung im Gegensatz zur separaten Ausführung wie bspw. Pos. 27) |
| 82 | zusätzliche integrierte Gasreinigungseinheiten, im Bereich der den Feinstaubfilterelemente integriert zur Entschwefelung beispielsweise mit Kalk bzw. zur Geruchsminderung sowie zur Abscheidung von PAK, BaP, PCDD/F beispielsweise mit Aktivkohle, HOK etc. bestückt (integrierte Ausführung im Gegensatz zur separaten Ausführung wie bspw. Pos. 27) |
| 84 | zusätzliche integrierte Gasreinigungseinheiten, den Feinstaubfilterelementen nachgeschaltet, zur Entschwefelung beispielsweise mit Kalk bzw. zur Geruchsminderung sowie zur Abscheidung von PAK, BaP, PCDD/F, CO beispielsweise mit Aktivkohle, HOK etc. bestückt (integrierte Ausführung im Gegensatz zur separaten Ausführung wie bspw. Pos. 27) |
| 85 | Wanne/Staubfangwanne für Grobfilter |
| 87 | Wanne/Staubfangwanne für Feinfilter |
| 88 | Einbringung für Benetzungsmittel, hier beispielsweise anströmseitig von Vorfilter |
| 88a | Einbringung für Benetzungsmittel, hier beispielsweise anströmseitig von Feinfilter |
| 89 | Zündvorrichtung (optional), für Staub, bspw. elektrische Zündvorrichtung |
| 90 | Isolierung |
| 91 | Heizelement(e) |
| 92 | Stutzen |
| 93 | Regelorgan für Falschluft |
| 94 | Stutzen für Heißluft-/Heißgaszustrom |
| 95 | Spannschellen |
| 96 | Schlauchschutz |

| 97 | Innenschlauch |
| 98 | Außenschlauch |
| E | Absaugeinheit |
| T1 | Temperaturmessstelle Kamin unten, unterhalb Anschlussstück 32 |
| T2 | Temperaturmessstelle Filtereintritt |
| T3 | Temperaturmessstelle Rezirkulationsraum |
| T4 | Temperaturmessstelle Abgaskernstrom, etwa in Höhe Rezirkulationsraum |
| T5 | Temperaturmessstelle Kamin oben, kurz unterhalb Austritt an Atmosphäre |
| T6 | Temperaturmessstelle Atmosphäre |
| T7 | Temperaturmessstelle Reingas, nach Ventilator |
| $T_{min}$ | Minimaltemperatur Filterelement(e) |
| $T_{max}$ | Maximaltemperatur Filterelement(e) |
| $\Delta p$ | Druckmessung im Kamin, vorteilhafterweise auch Differenzdruck zur Atmosphäre und/oder zum Aufstellungsraum der Feuerung (in Kombination mit Filter und/oder E-Filter) |

**Patentansprüche**

1. Vorrichtung zur Filterung von Feinstaub, insbesondere für Festbrennstoff-Kleinfeuerungsanlagen, mit

    einer Absaugeinheit (30) umfassend

        - einen Anschluss an das Abgassystem (32) zur Verbindung der Absaugeinheit (30) mit einem Rauchgasweg (10), aus welchem von einer Feuerung ein Rauchgas (04) strömt, und
        - eine Absaugöffnung (34),

    und einer Filtereinheit (60) umfassend

        - eine mit der Absaugöffnung (34) verbundene Eintrittsöffnung (66),
        - eine Austrittsöffnung (68),
        - ein zwischen der Eintrittsöffnung (66) und der Austrittsöffnung (68) angeordnetes Filterelement (50),

    wobei die Absaugeinheit (30) und die Filtereinheit (60) mit Filterelement (50) in einer Baugruppe, bevorzugt als "Auf-Dach-Lösung", am oberen Ende des Schornsteins, also am Ende des Rauchgaswegs, angeordnet sind, **dadurch gekennzeichnet, dass** die Vorrichtung ferner wenigstens eine der folgenden Ausgestaltungen aufweist:

        - als Filterelement (50) ist ein elektrostatischer Abscheider (E-Filter) vorgesehen, welcher dazu eingerichtet ist, Feinstaub, Kondensat und/oder Kondensatbestandteile abzuscheiden und welcher von der abgeschiedenen Verschmutzungsfracht in einen hierfür vorgesehenen Auffangraum (26) abgereingt werden kann; oder

- als Filterelement (50) ein Tiefenfilter vorgesehen ist, welches dazu eingerichtet ist, Feinstaub, Kondensat und/oder Kondensatbestandteile abzuscheiden; oder

- als Filterelement (50) ein zumindest teilweise regenerierbares Tiefenfilter vorgesehen ist, welches dazu eingerichtet ist, Feinstaub, Kondensat und/oder Kondensatbestandteile abzuscheiden; oder

- das Filterelementes (50) zur Regeneration im eingebauten Zustand innerhalb der Filtereinheit (60) durch mechanische Bewegung eingerichtet ist; oder

- als Filterelement (50) ein Filtermaterial, aus Kunststoff(-fasern), Metall(-fasern), Textil, Filz, und/oder Keramik, vorgesehen, welches dazu eingerichtet ist, Feinstaub, Kondensat und/oder Kondensatbestandteile abzuscheiden; oder

- als Filterelement (50) ist ein Vorfilter (52) gemäß der Filterklasse G4, M5, M6, F7, F8 oder F9 gemäß EN 779 und ein Feinfilter (56) gemäß der Filterklasse M5, M6, F7 bis F9 oder E10 bis E12 gemäß EN 779 vorgesehen; oder

- eine Reihenschaltung von mehr als zwei Filtermaterialien oder ein vergleichbares gradiertes Filtermaterial ist vorgesehen; oder

- das Filterelement ist als Taschenfilter oder Beutelfilter ausgeführt; oder

- die Filtereinheit (60) umfasst mindestens ein Formgebungselement (58), welches dazu eingerichtet ist, einem Zusammenfallen von Filterelementen entgegenzuwirken.

2. Vorrichtung zur Filterung von Feinstaub, insbesondere für Festbrennstoff-Kleinfeuerungsanlagen, mit

einer Absaugeinheit (30) umfassend

- einen Anschluss an das Abgassystem (32) zur Verbindung der Absaugeinheit (30) mit einem Rauchgasweg (10), aus welchem von einer Feuerung ein Rauchgas (04) strömt, und
- eine Absaugöffnung (34),

und einer Filtereinheit (60) umfassend

- eine mit der Absaugöffnung (34) mittels einer ersten Verbindungseinheit (38) verbundene Eintrittsöffnung (66),
- eine Austrittsöffnung (68),
- ein zwischen der Eintrittsöffnung (66) und der Austrittsöffnung (68) angeordnetes Filterelement (50), und

- ein zwischen der Austrittsöffnung (68) und dem Filterelement (50) angeordneter Lüfter (65), welcher dazu eingerichtet ist, einen Ansaugdruck zu erzeugen,

wobei die Absaugeinheit (30) und die Filtereinheit (60) mit Filterelement (50) in mindestens einer Baugruppe, angeordnet sind, **dadurch gekennzeichnet, dass** die zur Steuerung der Vorrichtung erforderliche Messung der Strömungsverhältnisse innerhalb der Vorrichtung indirekt über Temperaturmessungen der Gasströme mittels Thermoelementen oder der Gleichen erfolgt, die die Abkühlung des Reingases, über Oberflächen zumindest der Filtereinheit, im Vergleich zur höheren Temperatur des Rohgases als Grundlage hat und bevorzugt auch die Mischtemperatur von Rohbzw. Reingas mit Falschgas betrachtet.

3. Vorrichtung zur Filterung von Feinstaub, insbesondere für Festbrennstoff-Kleinfeuerungsanlagen, mit

einer Absaugeinheit (30) umfassend

- einen Anschluss an das Abgassystem (32) zur Verbindung der Absaugeinheit (30) mit einem Rauchgasweg (10), aus welchem von einer Feuerung ein Rauchgas (04) strömt, und
- eine Absaugöffnung (34),

und einer Filtereinheit (60) umfassend

- eine mit der Absaugöffnung (34) verbundene Eintrittsöffnung (66),
- eine Austrittsöffnung (68),
- ein zwischen der Eintrittsöffnung (66) und der Austrittsöffnung (68) angeordnetes Filterelement (50), und
- ein zwischen der Austrittsöffnung (68) und dem Filterelement (50) angeordneter Lüfter (65), welcher dazu eingerichtet ist, einen Ansaugdruck zu erzeugen,

wobei die Absaugeinheit (30) und die Filtereinheit (60) mit Filterelement (50) in mindestens einer Baugruppe, angeordnet sind, **dadurch gekennzeichnet, dass** ein thermischer Schutzmechanismus vorgesehen ist und die Steuerung auf Übertemperaturen des Rauchgases zumindest mit einer der folgenden Maßnahmen reagiert:

- Abschaltung des Lüfters; oder
- Reduktion der Lüfterdrehzahl, so dass alleine oder in Verbindung mit anderen Maßnahmen zur Reduktion der Übertemperaturen die zulässige Betriebstemperatur, insbesondere für das Filtermedium, bevorzugt nicht überschritten oder weniger bevorzugt nur kurzzeitig überschritten wird; oder

- Drosselung des Gaswegs; oder

- Kühlung durch Falschlufteintrag, bevorzugt in Strömungsrichtung vor der Filterelementen (50), durch zusätzliche Öffnung(-en) und/oder zusätzliche(n) Ventilator(en) ; oder

- Kühlung durch Kühlmittel, bevorzugt Wasserquench, bevorzugt in Strömungsrichtung vor der Filterelementen (50) ; oder

- Öffnung von (Not-)Klappen, so dass die heißen Rauchgase direkt vor dem Kontakt mit dem Filtermaterial an Atmosphäre abgeleitet werden.

4. Vorrichtung zur Filterung von Feinstaub, insbesondere für Festbrennstoff-Kleinfeuerungsanlagen, mit

einer Absaugeinheit (30) umfassend

- einen Anschluss an das Abgassystem (32) zur Verbindung der Absaugeinheit (30) mit einem Rauchgasweg (10), aus welchem von einer Feuerung ein Rauchgas (04) strömt, und
- eine Absaugöffnung (34),

und einer Filtereinheit (60) umfassend

- eine mit der Absaugöffnung (34) verbundene Eintrittsöffnung (66),
- eine Austrittsöffnung (68),
- ein zwischen der Eintrittsöffnung (66) und der Austrittsöffnung (68) angeordnetes Filterelement (50),

wobei die Absaugeinheit (30) und die Filtereinheit (60) mit Filterelement (50) in mindestens einer Baugruppe, angeordnet sind, **dadurch gekennzeichnet, dass** zumindest das Filterelement (50) in einer solchen Weise temperaturresistent ausgeführt ist, das eine thermische in-situ Regeneration ohne Zerstörung des Bauteils ermöglicht wird und das Bauteil auch den maximalen Bedingungen eines Kaminbrandes Stand hält.

5. Vorrichtung zur Filterung von Feinstaub, insbesondere für Festbrennstoff-Kleinfeuerungsanlagen, mit

einer Absaugeinheit (30) umfassend

- einen Anschluss an das Abgassystem (32) zur Verbindung der Absaugeinheit (30) mit einem Rauchgasweg (10), aus welchem von einer Feuerung ein Rauchgas (04) strömt, und
- eine Absaugöffnung (34),

und einer Filtereinheit (60) umfassend

- eine mit der Absaugöffnung (34) verbundene Eintrittsöffnung (66),
- eine Austrittsöffnung (68),
- ein zwischen der Eintrittsöffnung (66) und der Austrittsöffnung (68) angeordnetes Filterelement (50),

wobei die Absaugeinheit (30) und die Filtereinheit (60) als mindestens zwei separate, räumlich voneinander getrennte Baugruppen angeordnet und mittels Verbindungseinheiten bzw. -mitteln (38, 48) strömungstechnisch miteinander verbunden bzw. verbindbar sind, **dadurch gekennzeichnet, dass** ein E-Filter oder ein Tiefenfilter als Filterelement (50) vorgesehen ist um Feinstaub, Kondensat und/oder Kondensatbestandteile abzuscheiden.

6. Vorrichtung nach einem der Ansprüche 1 bis 5, **dadurch gekennzeichnet, dass** über eine Absaugöffnung (34) immer eine Absaugung erfolgt, vorzugsweise mit einer ergänzenden Rezirkulation, vorzugsweise über eine Rezirkulationsöffnung, wobei der freie Strömungsquerschnitt in Verbindungselementen bevorzugt geringer ausgebildet ist als der Strömungsquerschnitt der Absaugeinheit (30), wobei besonders bevorzugt der freie Strömungsquerschnitt im Bereich des Bypassweges (20) geringfügig verringert ausgebildet ist, beispielsweise durch die Leitbleche (49) der Rezirkulationseinheit (40), sofern der hieraus resultierende Druckverlust keine wesentlichen negativen Effekte in Bezug auf die Feuerung und die sichere Ableitung des Rauchgases entstehen lässt.

7. Vorrichtung und Filtereinheit (60) nach einem der Ansprüche 1 bis 6, **gekennzeichnet durch** einen zwischen der Austrittsöffnung (68) und dem Filterelement (50) angeordneten Lüfter (65), welcher dazu eingerichtet ist, einen Ansaugdruck zu erzeugen und der optional zusätzlich als Anfahrhilfe für die Feuerung genutzt werden kann.

8. Vorrichtung nach einem der Ansprüche 1 bis 7, wobei eine thermische Trennung (22) zwischen dem Bypassweg (20) und der Filtereinheit (60), insbesondere zwischen dem Bypassweg (20) und dem Filterelement (50), vorgesehen ist, bevorzugt aus künstlichen Mineralfasern, besonders bevorzugt aus Steinwolle, die bei Übertemperaturen des Rauchgases der Feuerung die temperaturkritischen Bauteile, wie bevorzugt die Filtereinheit (60) und das Filterelement (50) und/oder das Filtermaterial vor unzulässig hohen Betriebstemperaturen schützt.

9. Vorrichtung nach einem der Ansprüche 1 bis 8, wobei die Filtereinheit (60) ein zusätzliches Filterelement (78) aufweist, welches dem Filterelement (50) nachgeschaltet ist, wobei vorzugsweise vorgesehen ist, dass die Vorrichtung ferner einen Schalldämpfer (72) und eine Umschalteinheit (76) umfasst, welche dazu eingerichtet ist, ein das Filterelement (50) bereits durchlaufenes Gas anschließend dem zusätzlichen Filterelement (78) oder dem Schalldämpfer (72) zuzuführen.

10. Vorrichtung nach einem der Ansprüche 1 bis 9, wobei die Filtereinheit (60) ferner mindestens eine Zusatzfunktion zur Feinstaubabscheidung aufweist, die vorzugsweise als integrierte Abscheidung (80, 82, 84) sowie auch als separate Abscheidung (27) sowohl für saure Gasbestandteile wie SO2 als auch für Gerüche, PAK, BaP, PCDD/F ausgeführt sein kann.

11. Vorrichtung nach einem der Ansprüche 1 bis 10, wobei Mittel bzw. Einrichtungen vorgesehen sind, die eine Veränderung der Rauchgastemperatur vor einem ersten Kontakt des Rauchgases mit dem Filtermaterial bewirken:

   - eine Erwärmung des Rauchgases durch elektrische Heizelemente (91) und/oder durch den Zustrom von Heißluft bzw. Heißgas, und/oder
   - eine Abkühlung des Rauchgases durch Falschluft (02) (Falschluftklappe oder -ventilator) oder Verdampfungskühlung.

12. Vorrichtung nach einem der Ansprüche 1 bis 11, wobei eine Einbringung von Benetzungsmittel (88/88a) vorgesehen ist, vorzugsweise derart, dass eine Konditionierung von mindestens einem der eingesetzten Filter, insbesondere für Tiefenfiltermedien, bevorzugt (bezogen auf den Normalbetrieb) anströmseitig des Filters erfolgt, die zumindest eine der folgenden Mechanismen beinhaltet:

   a) Benetzung, vorzugsweise mit Wasser, das vorzugsweise mit einem Frostschutzmittel versetzt ist; und/oder,
   b) Precoating, vorzugsweise mit Kalk.

13. Vorrichtung nach einem der Ansprüche 1 bis 12, wobei ein im Bereich der Absaugöffnung (34), bevorzugt unterhalb, angeordneter Temperaturfühler (T1) vorgesehen ist, welcher dazu eingerichtet ist, bei Überschreiten einer vordefinierten, optional saisonal spezifischen bzw. einer im Verhältnis zur Umgebungstemperatur verschiedenen, Temperatur des Rauchgases (04) und/oder aufgrund eines ansteigenden Temperaturgradienten den Lüfter (65) zu aktivieren, wobei vorzugsweise eine Druckmessung (Δp) zumindest im Kamin vorgesehen ist.

14. Vorrichtung nach einem der Ansprüche 1 bis 13, wobei die Absaugeinheit (30) eine konische, sich nach unten aufweitende Form aufweist, wobei vorzugsweise eine Halteplatte (18) für die Absaugeinheit (E) am Rauchgasweg (10) vorgesehen ist, die vorzugsweise mit einem zusätzlichen Wetterschutz (17) versehen sein kann, und/oder wobei das Filtergehäuse (62) zumindest wärmestrahlungsmindernd und bevorzugt rußbrandfest ausgeführt ist.

15. Vorrichtung nach einem der Ansprüche 1 bis 14, wobei die Steuerung des Lüfters, insbesondere der Lüfterdrehzahl, über ein dynamisches Gleichgewicht erfolgt, mit

   einer Primärregelung, welche zumindest eins der folgenden Kriterien aufweist

      - Drehzahlerhöhung zur Verhinderung oder Begrenzung von nicht erfasstem Rauchgas, das über den Bypassweg 20 an die Atmosphäre abgegeben werden könnte; oder
      - Drehzahlverringerung zur Erhöhung der Gastemperaturen im Bereich der Filtermedien bei zu viel Falschgas im System; und/oder

   mit vorzugsweise einer Sekundärregelung, welche die folgenden Kriterien aufweist

      - Drehzahlerhöhung bei hohen Temperaturen im Bereich der Filtermedien zur Kühlung durch mehr Falschgas, sofern die Rohgastemperatur bzw. Rauchgastemperatur von der Feuerung unterhalb eines vorgegebenen Wert liegt.

Fig. 1

Fig. 2

Fig. 3

Fig. 4

Fig. 5

Fig. 6

Fig. 7

Fig. 8

Fig. 9

Fig. 10

Fig. 11

Fig. 11a

**Fig. 12**

**Fig. 12a**

Fig. 13

Fig. 14

Fig. 15

T3

T2

T4

06

08

32

04

T1

## Fig. 16

08

20

46

T3

65

68

60

T4

50

34

66

T2

04

22

06

32

T1

## Fig. 16a

Fig. 17

Fig. 17a

Fig. 18

Fig. 19

Fig. 20

Fig. 21

Fig. 22

Fig. 23

89   85

87

Fig. 24

85

87   89

Fig. 25

**Fig. 26**

**Fig. 27**

74

73

75

77

79

## Fig. 28

79a

88

52

56

88a

## Fig. 29

27

**Fig. 30**

20

22

24

60

50

26

28/28a

04

**Fig. 31**

**IN DER BESCHREIBUNG AUFGEFÜHRTE DOKUMENTE**

**In der Beschreibung aufgeführte Patentdokumente**

- DE 102008059432 A1
- DE 102014015491 A1
- DE 102015103337
- DE 3444437
- WO 2008010242 A1
- EP 0876190 A1

**In der Beschreibung aufgeführte Nicht-Patentliteratur**

- **FRITZ, W. ; KERN, H.** Reinigung von Abgasen. Vogel Buchverlag, 1992